(19) **Europäisches Patentamt / European Patent Office / Office européen des brevets**

(11) **EP 3 805 308 B1**

(12) **EUROPEAN PATENT SPECIFICATION**

(45) Date of publication and mention
of the grant of the patent:
**05.11.2025 Bulletin 2025/45**

(21) Application number: **19812234.3**

(22) Date of filing: **31.01.2019**

(51) International Patent Classification (IPC):
**C08L 21/00** $^{(2006.01)}$    **C08J 3/24** $^{(2006.01)}$
**C08L 23/02** $^{(2025.01)}$    **C08L 23/26** $^{(2025.01)}$
**C08L 79/00** $^{(2006.01)}$    **C08K 3/00** $^{(2018.01)}$
**C08L 9/02** $^{(2006.01)}$    **C08L 23/12** $^{(2006.01)}$
**C08J 3/00** $^{(2006.01)}$

(52) Cooperative Patent Classification (CPC):
(C-Sets available)
**C08J 3/005; C08J 3/247; C08L 9/02;**
C08J 2309/02; C08J 2423/12; C08J 2451/06;
C08L 23/12    (Cont.)

(86) International application number:
**PCT/JP2019/003467**

(87) International publication number:
**WO 2019/230047 (05.12.2019 Gazette 2019/49)**

(54) **THERMOPLASTIC ELASTOMER COMPOSITION AND PRODUCTION METHOD THEREFOR**

THERMOPLASTISCHE ELASTOMERZUSAMMENSETZUNG UND HERSTELLUNGSVERFAHREN
DAFÜR

COMPOSITION D'ÉLASTOMÈRE THERMOPLASTIQUE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2018 JP 2018101568**

(43) Date of publication of application:
**14.04.2021 Bulletin 2021/15**

(73) Proprietor: **Mitsui Chemicals, Inc.
Tokyo 104-0028 (JP)**

(72) Inventor: **ENOMOTO, Tatsuya
Sodegaura-shi, Chiba 299-0265 (JP)**

(74) Representative: **Hoffmann Eitle
Patent- und Rechtsanwälte PartmbB
Arabellastraße 30
81925 München (DE)**

(56) References cited:
EP-A1- 1 728 803      WO-A1-2005/097840
CN-A- 107 383 627     CN-A- 107 383 627
JP-A- 2004 285 252    JP-A- 2009 161 721
JP-A- S56 143 233     JP-A- S60 156 738
JP-A- S62 215 654

• **DATABASE WPI Week 201806, 24 November 2017
Derwent World Patents Index; AN 2017-825529,
XP002805392**

(52) Cooperative Patent Classification (CPC): (Cont.)

C-Sets
**C08L 9/02, C08L 23/12, C08L 51/06, C08L 79/00**

**Description**

TECHNICAL FIELD

The present invention relates to a thermoplastic elastomer composition including a crosslinkable rubber and an olefin polymer, to a method for producing the same, and to a molded article comprising the thermoplastic elastomer composition.

BACKGROUND ART

Crosslinkable polar rubbers are widely used as molding materials having rubber elasticity. Usually, they are used together with crosslinking agents, and are molded and crosslinked concurrently to give articles having good rubber elasticity. However, a polar rubber containing a crosslinking agent exhibits an increased viscosity stemming from the crosslinking reaction and thus is difficult to pour into a mold, failing to fill the mold completely. The final articles that are obtained by the molding of such a rubber often have defects. Thus, approaches to enhancing the moldability of polar rubbers in crosslinking molding have been desired.

Incidentally, thermoplastic resins such as polyolefins are insufficient in rubber elasticity but are excellent in moldability. A crosslinked polar rubber and a polyolefin are expected to give a resin composition which has a combination of excellent characteristics of these resins, specifically, a resin composition which exhibits excellent moldability and can produce molded articles having rubber elasticity. However, it is known that these two materials are poorly miscible and are blended only to give an inhomogeneous mixture which cannot give elastic molded articles.

Thus, there has been a demand for the development of a homogeneous blend of a crosslinkable rubber and a polyolefin.

Patent Document 1 discloses a technique in which a copolymer of epichlorohydrin and ethylene oxide is used as an uncrosslinked rubber, and this rubber and a crystalline polyolefin are blended in the presence of a chlorinated hydrocarbon and are crosslinked as such.

Patent Document 2 discloses techniques in which a blend of an olefin polymer and a nitrile rubber is obtained using, as a compatibilizer, a block copolymer that is produced from an olefin polymer having a graft-forming functional group and a nitrile rubber having a graft-forming functional group, and the blend is crosslinked using a crosslinking agent.

Further, Patent Document 3 discloses a technique which improves the compatibility between an olefin polymer and an acrylic ester copolymer rubber using, as a compatibilizing graft polymer, a graft copolymer that includes a polymer compatibilizing segment and an acidic acrylic ester copolymer rubber compatibilizing segment.

However, there has still been a demand for the development of a thermoplastic elastomer composition which includes a crosslinkable rubber and an olefin polymer with enhanced dispersibility and has excellent moldability.

Furthermore, CN 107 383 627 A concerns a composition which is prepared from a vulcanized mixture through a dynamic vulcanization process. The vulcanized mixture comprises, by weight, 100 parts of a vulcanizable elastomer, 50-200 parts of a thermoplastic polyolefin, 0.01-10 parts of a cross-linking agent, 10-100 parts of filling oil, 0.1-5 parts of an olefinic acid compound-modified thermoplastic polyolefin, and 0.01-0.1 part of a carbodiimide compound.

WO 2005/097840 A1 inter alia describes a resin modifier and a polar group-containing polymer composition including the resin modifier. The resin modifier is obtained by reacting a polyolefin having a group which reacts with a carbodiimide group, and a carbodiimide group-containing compound, wherein the content of the carbodiimide group is from 1 to 200 mmol per 100 g of the resin modifier. A polar group-containing polymer composition comprises from 1 to 30% by weight of the resin modifier, from 99 to 20% by weight of a polar group-containing polymer, and from 0 to 80% by weight of an olefin polymer.

JP 2004-285252 A discloses a thermoplastic elastomer composition containing (a) 100 pts. wt. of an epichlorohydrin rubber, (b) 15-200 pts. wt. of polypropylene and (c) ≥0.5 pt. wt. of a solubilizing agent selected from an acid-modified polypropylene, an acid-modified polypropylene derivative and an acid-modified polypropylene graft derivative and contains the crosslinked epichlorohydrin rubber essentially homogeneously dispersed in the polypropylene.

In JP 2009-161721 A, a thermoplastic elastomer composition comprising a bond formed by bonding a modified 4-methyl-1-pentene copolymer having introduced functional groups and an acrylic rubber via a crosslinking agent.

CITATION LIST

PATENT LITERATURE

   Patent Document 1: JP-A-S62-215654

Patent Document 2: JP-A-S56-143233
Patent Document 3: JP-A-S60-156738

## SUMMARY OF INVENTION

### TECHNICAL PROBLEM

An object of the present invention is to provide a thermoplastic elastomer composition which includes a polar rubber having crosslinks and an olefin polymer in a highly dispersed state relative to each other and which has excellent moldability, and a method for producing such compositions.

### SOLUTION TO PROBLEM

The present inventions relates to a thermoplastic elastomer composition, a molded article, and a method for producing the thermoplastic elastomer composition according to the appended claims.

The present invention provides a thermoplastic elastomer composition obtained by dynamically heat treating:

0.01 to 30 mass% of a carbodiimide group-containing compound (A),
0.05 to 70 mass% of an olefin polymer (B) having a group reactive with a carbodiimide group,
10 to 95 mass% of a polar rubber (C),
0 to 85 mass% of olefin polymer (D), wherein the total of the carbodiimide group-containing compound (A), the olefin polymer (B) having a group reactive with a carbodiimide group, the polar rubber (C) and the optional olefin polymer (D) are taken as 100 mass%, and
a crosslinking agent (E) capable of crosslinking the polar rubber (C),
wherein the polar rubber (C) comprises a polar rubber (C1) having a group reactive with a carbodiimide group.

The present invention further provides a molded article comprising the thermoplastic elastomer composition according to the present invention.

The present invention further provides a method for producing a thermoplastic elastomer composition of the present invention, comprising dynamically heat treating in a sequential or simultaneous manner:

a carbodiimide group-containing compound (A),
an olefin polymer (B) having a group reactive with a carbodiimide group,
a polar rubber (C),
a crosslinking agent (E) capable of crosslinking the polar rubber (C), and optionally
an olefin polymer (D).

### ADVANTAGEOUS EFFECTS OF INVENTION

The thermoplastic elastomer compositions provided according to the present invention exhibit elasticity stemming from the crosslinked polar rubber and are thermoplastic and excellent in moldability. The methods according to the present invention can produce such thermoplastic elastomer compositions. The thermoplastic elastomer compositions according to the present invention include a polar rubber having crosslinks and optionally an olefin polymer as required, and have a high level of dispersion of the components relative to one another. Preferably, the thermoplastic elastomer composition according to the present invention includes a polar rubber having crosslinks and an olefin polymer which are highly dispersed relative to each other. Molded articles obtained from the thermoplastic elastomer compositions of the present invention have appropriate rubber elasticity, are excellent in mechanical characteristics such as elongation at break, tensile strength at break and hardness, and have excellent properties such as shape stability, abrasion resistance, oil resistance and ozone resistance, thus finding suitable use in various applications.

### BRIEF DESCRIPTION OF DRAWINGS

[Fig. 1] Fig. 1 is a x1000 SEM image illustrating thermoplastic elastomer composition 1 obtained in Example 1.
[Fig. 2] Fig. 2 is a x1000 SEM image illustrating thermoplastic elastomer composition 2 obtained in Example 2.
[Fig. 3] Fig. 3 is a x1000 SEM image illustrating thermoplastic elastomer composition 3 obtained in Example 3.
[Fig. 4] Fig. 4 is a x1000 SEM image illustrating thermoplastic elastomer composition 4 obtained in Example 4.

[Fig. 5] Fig. 5 is a x1000 SEM image illustrating thermoplastic elastomer composition 5 obtained in Example 5.

[Fig. 6] Fig. 6 is a x1000 SEM image illustrating thermoplastic elastomer composition 6 obtained in Example 6.

[Fig. 7] Fig. 7 is a x1000 SEM image illustrating thermoplastic elastomer composition 7 obtained in Example 7.

[Fig. 8] Fig. 8 is a x1000 SEM image illustrating thermoplastic elastomer composition 8 obtained in Example 8.

[Fig. 9] Fig. 9 is a x1000 SEM image illustrating thermoplastic elastomer composition 9 obtained in Example 9.

[Fig. 10] Fig. 10 is a x1000 SEM image illustrating thermoplastic elastomer composition 10 obtained in Example 10.

[Fig. 11] Fig. 11 is a x1000 SEM image illustrating thermoplastic elastomer composition 11 obtained in Comparative Example 1.

[Fig. 12] Fig. 12 is a x1000 SEM image illustrating thermoplastic elastomer composition 12 obtained in Comparative Example 2.

[Fig. 13] Fig. 13 is a x1000 SEM image illustrating thermoplastic elastomer composition 13 obtained in Comparative Example 3.

[Fig. 14] Fig. 14 is a x1000 SEM image illustrating thermoplastic elastomer composition 14 obtained in Comparative Example 4.

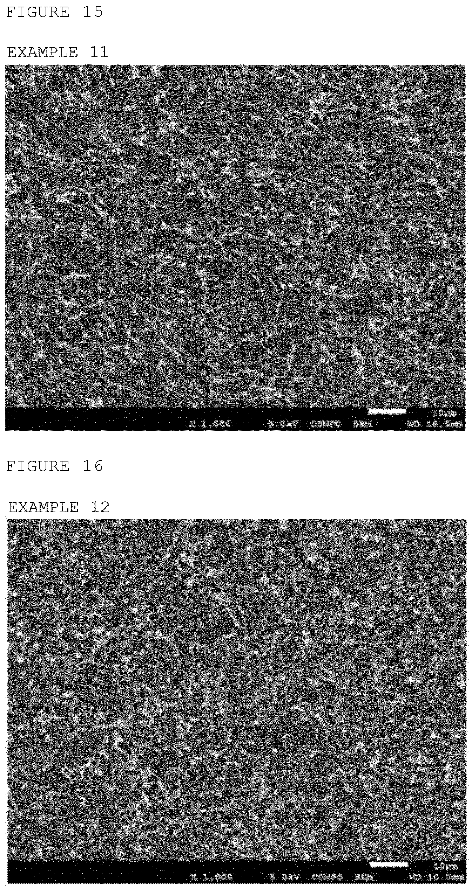

[Fig. 15] Fig. 15 is a x1000 SEM image illustrating thermoplastic elastomer composition 15 obtained in Example 11.

[Fig. 16] Fig. 16 is a x1000 SEM image illustrating thermoplastic elastomer composition 16 obtained in Example 12.

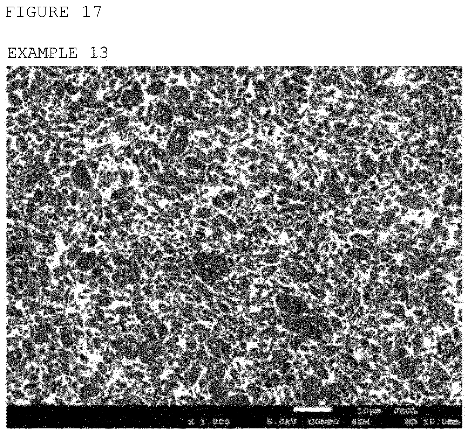

[Fig. 17] Fig. 17 is a x1000 SEM image illustrating thermoplastic elastomer composition 17 obtained in Example 13.

DESCRIPTION OF EMBODIMENTS

Hereinbelow, the present invention will be described in detail.

((Thermoplastic elastomer compositions))

A thermoplastic elastomer composition of the present invention is obtained by dynamically heat treating 0.01 to 30 mass% of a carbodiimide group-containing compound (A), 0.05 to 70 mass% of an olefin polymer (B) having a group reactive with a carbodiimide group, 10 to 95 mass% of a polar rubber (C), 0 to 85 mass% of an olefin polymer (D), that is, an optional olefin polymer (D), and a crosslinking agent (E) capable of crosslinking the polar rubber (C). The total of the carbodiimide group-containing compound (A), the olefin polymer (B) having a group reactive with a carbodiimide group, the polar rubber (C) and the optional olefin polymer (D) are taken as 100 mass%. The polar rubber (C) comprises a polar rubber (C1) having a group reactive with a carbodiimide group. The components used as ingredients for the thermoplastic elastomer composition of the present invention will be described hereinbelow.

Carbodiimide group-containing compounds (A)

The carbodiimide group-containing compound (A) used in the present invention is not particularly limited as long as the compound has a carbodiimide group represented by -N=C=N-. The compound is preferably a polycarbodiimide having a repeating unit represented by the following general formula:

$$-N=C=N-R^1-$$

[wherein $R^1$ is a divalent organic group].

The polycarbodiimide may be synthesized by any method without limitation. For example, the polycarbodiimide may be synthesized by reacting an organic polyisocyanate in the presence of a catalyst that facilitates the carbodiimidization of isocyanate groups.

When the carbodiimide group-containing compound (A) used in the present invention is the above polycarbodiimide, the polystyrene-equivalent number average molecular weight (Mn) thereof determined by gel permeation chromatography (GPC) is usually 400 to 500,000, preferably 1,000 to 10,000, and more preferably 2,000 to 4,000. This range of number average molecular weight (Mn) is advantageous in that the components in the composition exhibit good compatibility, and that the thermoplastic elastomer composition that is obtained has rubber elasticity and oil resistance and also exhibits excellent moldability.

In the present invention, the carbodiimide group-containing compounds (A) may be used singly, or a plurality thereof may be used in combination. For example, use may be made of a polycarbodiimide alone, a combination of a polycarbodiimide and a monocarbodiimide, or a monocarbodiimide alone. In the present invention, it is preferable that the carbodiimide group-containing compound (A) that is used comprise a polycarbodiimide.

The carbodiimide group-containing compound (A) that is used may be a commercially available carbodiimide group-containing compound. Examples of the commercially available carbodiimide group-containing compounds include CARBODILITES HMV-8CA, HMV-15CA and LA1 manufactured by Nisshinbo Chemical Inc.

The content of the carbodiimide groups in the carbodiimide group-containing compound (A) and in a reaction product obtained from the compound may be measured by a technique such as $^{13}$C-NMR, IR or titration, and may be assessed as the carbodiimide equivalent. A peak may be observed at 130 to 142 ppm in $^{13}$C-NMR and at 2130 to 2140 cm$^{-1}$ in IR.

Olefin polymers (B) having group reactive with carbodiimide group

In the present invention, the olefin polymer (B) having a group reactive with a carbodiimide group may be obtained by, although not particularly limited to, introducing a group reactive with a carbodiimide group into a polyolefin using a compound (b) which has a group reactive with a carbodiimide group.

The group reactive with a carbodiimide group may be introduced into a polyolefin by a known method. For example, a compound (b) having a group reactive with a carbodiimide group may be graft-copolymerized on the main chain of a polyolefin, or a compound (b) having a group reactive with a carbodiimide group, and an olefin may be radically copolymerized.

The following illustrates in detail the production of the olefin polymers (B) having a group reactive with a carbodiimide group, by graft copolymerization and by radical copolymerization.

[Graft copolymerization]

The olefin polymer (B) of the present invention having a group reactive with a carbodiimide group may be obtained by the graft copolymerization of a compound (b) having a group reactive with a carbodiimide group onto the main chain of an unmodified polyolefin (hereinafter, also written as the polyolefin main chain).

⟨Unmodified polyolefins (polyolefin main chains)⟩

The unmodified polyolefin used as the polyolefin main chain is a polymer principally composed of a C2-C20 aliphatic $\alpha$-olefin, cyclic olefin or nonconjugated diene, and is preferably a polymer principally composed of a C2-C10 $\alpha$-olefin, more preferably a C2-C8 $\alpha$-olefin. The olefins may be used singly, or two or more may be used in combination. In the present invention, use may be preferably made of a homopolymer or a copolymer of any of ethylene, propylene, 1-butene, 4-methyl-1-pentene, 3-methyl-1-butene, 1-hexene, 1-octene, tetracyclododecene and norbornene. Further, these polymers may have an isotactic structure or a syndiotactic structure, and are not particularly limited in terms of stereoregularity.

In the thermoplastic elastomer composition of the present invention, it is probable that the carbodiimide group-containing compound (A) reacts with at least part of the olefin polymer (B) having a group reactive with a carbodiimide group, and/or the polar rubber (C) described later during the melt kneading of the ingredients, and the resultant reaction product serves as a compatibilizer to enhance the compatibility between the polar rubber (C) and the olefin polymer (D). The thermoplastic elastomer composition of the present invention preferably includes a reaction product (I) formed between the carbodiimide group-containing compound (A) and the olefin polymer (B) having a group reactive with a carbodiimide group.

Here, the reaction product (I) offers marked enhancements in compatibility when the reaction product (I) has a main chain similar to that of the olefin polymer (D). Thus, it is more preferable that the ingredient that will form the main chain of the reaction product (I), namely, the olefin polymer (B) having a group reactive with a carbodiimide group have a main chain similar to the structure of the main chain of the olefin polymer (D).

When, for example, the olefin polymer (D) described later is a propylene polymer, the polyolefin main chain may be preferably a propylene polymer selected from, for example, propylene homopolymer and copolymers of propylene and other $\alpha$-olefins.

The density of the polyolefin used in the graft copolymerization, that is, the density of the polyolefin main chain before the introduction of a group reactive with carbodiimide is usually 0.8 to 1.2 g/cm$^3$, preferably 0.90 to 1.1 g/cm$^3$, and more preferably 0.925 to 1.0 g/cm$^3$.

The melt flow rate (MFR) of the polyolefin main chain as measured at 190°C or 230°C under 2.16 kg load in accordance with ASTM D1238 is usually 0.01 to 500 g/10 min, preferably 0.05 to 200 g/10 min, and more preferably 0.1 to 100 g/10 min. When the density and the MFR are in these ranges, the graft copolymer resulting from the modification have similar density and MFR and are therefore easy to handle.

The crystallinity of the polyolefin main chain used in the graft copolymerization is usually not less than 2%, preferably not less than 5%, and more preferably not less than 10%. When the crystallinity is in this range, the graft copolymer after the modification exhibits excellent handleability.

The polyolefin main chain used in the graft copolymerization preferably has a number average molecular weight (Mn) measured by gel permeation chromatography (GPC) of 5,000 to 500,000, and more preferably 10,000 to 100,000. When the average molecular weight (Mn) is in this range, the handleability is excellent. In the case of an ethylenic polyolefin, the number average molecular weight may be calculated as that of polyethylene when the amount of comonomer is not more than 10 mol% and may be calculated in terms of ethylene-propylene when the amount of comonomer is not less than 10 mol% (the basis of the ethylene content is 70 mol%).

The polyolefin main chain described above may be produced by any conventionally known method, for example, by polymerization using a titanium catalyst, a vanadium catalyst, a metallocene catalyst, etc. The polyolefin used in the graft modification may be in the form of a resin or an elastomer, and may have an isotactic structure or a syndiotactic structure and is not particularly limited in terms of stereoregularity. A commercially available resin may be used directly.

In the present invention, the unmodified polyolefin that will serve as the polyolefin main chain may have properties similar to those of the olefin polymer (D) described later, or may be of a completely different type. When, however, high compatibility is required, it is preferable that the unmodified polyolefin be similar to the olefin polymer (D) in properties such as density, monomer configuration, stereoregularity, and structural unit arrangement such as random or blockwise. In particular, the monomer configurations of the polymers are preferably similar to each other. Further, the unmodified polyolefin that will serve as the polyolefin main chain is more preferably a thermoplastic polyolefin resin.

(Compounds (b) having group reactive with carbodiimide group)

Examples of the compounds (b) having a group reactive with a carbodiimide group include compounds having an active hydrogen-containing group that is reactive with a carbodiimide group. Specific examples thereof include compounds having a group derived from a carboxylic acid, a carboxylic acid anhydride, an amine, an alcohol, or a thiol. That is, in the present invention, the olefin polymer (B) having a group reactive with a carbodiimide group may be suitably, for example, a polyolefin having a carboxylic acid anhydride group, a carboxyl group (-COOH), a hydroxyl group (-OH), or a thiol group (-SH) as the group reactive with a carbodiimide group.

Of the above compounds (b) having a group reactive with a carbodiimide group, those compounds having a group derived from an unsaturated carboxylic acid such as a carboxylic acid or a carboxylic acid anhydride are preferably used. In particular, unsaturated carboxylic acids and/or derivatives thereof are preferably used. In addition to the compounds having an active hydrogen-containing group, those compounds which have a group easily converted into an active hydrogen-containing group by the action of water may be also preferably used. Specific examples of such compounds include compounds having an epoxy group or a glycidyl group. In the present invention, the compounds (b) having a group reactive with a carbodiimide group may be used singly, or two or more may be used in combination.

In the present invention, an unsaturated carboxylic acid and/or a derivative thereof may be used as the compound (b) having a group reactive with a carbodiimide group. In this case, the compound (b) may be an unsaturated compound having one or more carboxyl groups, an unsaturated compound having one or more carboxylic acid anhydride groups, or a derivative thereof. Examples of the unsaturated groups include vinyl groups, vinylene groups and unsaturated cyclic hydrocarbon groups. Specific examples of the compounds (b) include unsaturated carboxylic acids such as acrylic acid, methacrylic acid, maleic acid, fumaric acid, tetrahydrophthalic acid, itaconic acid, citraconic acid, crotonic acid, isocrotonic acid, norbornenedicarboxylic acid and bicyclo[2,2,1]hept-2-ene-5,6-dicarboxylic acid, acid anhydrides thereof, and derivatives thereof (such as, for example, acid halides, amides, imides and esters). Specific examples of the acid anhydrides and the derivatives include malenyl chloride, malenyl imide, maleic anhydride, itaconic anhydride, citraconic anhydride, tetrahydrophthalic anhydride, bicyclo[2,2,1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth)acrylate, hydroxypropyl (meth)acrylate, glycidyl (meth)acrylate, aminoethyl methacrylate and aminopropyl methacrylate.

The unsaturated carboxylic acids and/or the derivatives thereof may be used singly, or two or more may be used in combination as the compounds (b) having a group reactive with a carbodiimide group. Of the compounds described above, maleic anhydride, (meth)acrylic acid, itaconic anhydride, citraconic anhydride, tetrahydrophthalic anhydride, bicyclo[2,2,1]hept-2-ene-5,6-dicarboxylic anhydride, hydroxyethyl (meth)acrylate, glycidyl methacrylate and aminopropyl methacrylate are preferable. Further, dicarboxylic acid anhydrides such as maleic anhydride, itaconic anhydride, citraconic anhydride, tetrahydrophthalic anhydride and bicyclo[2,2,1]hept-2-ene-5,6-dicarboxylic anhydride are particularly preferable.

(Graft copolymerization methods)

The graft copolymerization (the graft modification) for obtaining the olefin polymer (B) having a group reactive with a carbodiimide group that is used in the present invention may be performed by, for example, graft-copolymerizing the compound (b) having a group reactive with a carbodiimide group onto the polyolefin that will form the main chain (the polyolefin main chain) in the presence of a radical initiator. In the graft copolymerization, other components such as ethylenically unsaturated monomers may be present as required together with the compound (b) having a group reactive with a carbodiimide group.

The compound (b) having a group reactive with a carbodiimide group may be graft-copolymerized onto the polyolefin main chain by a known graft polymerization method such as a solution method or a melt-kneading method without limitation.

[Radical copolymerization]

The olefin polymer (B) having a group reactive with a carbodiimide group that is used in the present invention may be also obtained by the radical copolymerization of an olefin and a compound (b) having a group reactive with a carbodiimide group. The olefin may be the same as the olefin mentioned hereinabove that forms the polyolefin main chain. The compound (b) having a group reactive with a carbodiimide group may be the same as described in the section of graft copolymerization.

The olefin and the compound (b) having a group reactive with a carbodiimide group may be copolymerized by a known radical copolymerization method without limitation.

[Characteristics of olefin polymers (B) having group reactive with carbodiimide group]

In the present invention, the olefin polymer (B) having a group reactive with a carbodiimide group is used to constitute a thermoplastic elastomer composition together with the carbodiimide group-containing compound (A). In the thermoplastic elastomer composition, at least part of the olefin polymer (B) usually reacts with the carbodiimide group-containing compound (A) to form a reaction product (I). The thermoplastic elastomer composition according to the present invention attains a high level of dispersion of the constituent components and exhibits excellent mechanical characteristics probably partly because the reaction product (I) serves as a compatibilizer in the thermoplastic elastomer composition.

In the olefin polymer (B) having a group reactive with a carbodiimide group that is used in the present invention, the content of the compound (b) having a group reactive with a carbodiimide group (the content of moieties derived from the compound (b)) is usually 0.1 to 10 mass%, preferably 0.1 to 3.0 mass%, and more preferably 0.1 to 2.0 mass%. This content of the compound (b) having a group reactive with a carbodiimide group advantageously ensures that the reaction with the carbodiimide group-containing compound (A) occurs easily.

When the olefin polymer (B) having a group reactive with a carbodiimide group that is used in the present invention satisfies the above content of the compound (b) having a group reactive with a carbodiimide group, bonding sites are ensured for the formation of a reaction product (I) between the carbodiimide group-containing compound (A) and the olefin polymer (B) having a group reactive with a carbodiimide group, advantageously offering compatibilizing effects in the thermoplastic elastomer composition that is obtained.

In order to prevent gelation by crosslinking, it is preferable that the olefin polymer (B) having a group reactive with a carbodiimide group be of a lower number average molecular weight, and the molar ratio be lower of the number of moles of the compound (b) having a group reactive with a carbodiimide group to the number of moles of the olefin polymer (B) having a group reactive with a carbodiimide group. Specifically, it is preferable that the main chain of the olefin polymer (B) having a group reactive with a carbodiimide group bear a small number, not a large plurality but as small as close to one, of molecules of the compound (b) having a group reactive with a carbodiimide group. In this case, the carbodiimide group-containing compound (A) reacts, through its carbodiimide group (N=C=N), with moieties derived from the compound (b) having a group reactive with a carbodiimide group with little occurrence of gelation by crosslinking.

In the present invention, the number average molecular weight (Mn) of the olefin polymer (B) having a group reactive with a carbodiimide group, and the content of the compound (b) having a group reactive with a carbodiimide group are controlled so as to ensure that gelation by crosslinking will not occur even when the olefin polymer (B) reacts with the carbodiimide group-containing compound (A) to form a reaction product (I) during the production of the thermoplastic elastomer composition, thereby realizing high production stability, and also to ensure that the reaction product (I) will sufficiently perform as a compatibilizer in the thermoplastic elastomer composition that is obtained.

In the present invention, the olefin polymer (B) having a group reactive with a carbodiimide group preferably satisfies the following formula (1):

$$0.1 < Mn/\{(100 - M)*f/M\} < 6 \quad \cdots \quad (1)$$

(In the formula (1),

f: formula weight (g/mol) of the compound (b) having a group reactive with a carbodiimide group
M: content (mass%) of the compound (b) having a group reactive with a carbodiimide group (content of moieties derived from the compound (b))
Mn: number average molecular weight of the olefin polymer (B) having a group reactive with a carbodiimide group)

To prevent the occurrence of gelation due to crosslinking and thereby to ensure production stability, it is more preferable that the formula (2) described below be satisfied, and it is most preferable that the formula (3) described below be satisfied.

$$0.3 < Mn/\{(100 - M)*f/M\} < 4 \cdots (2)$$

$$0.5 < Mn/\{(100 - M)*f/M\} < 2.8 \cdots (3)$$

When the number average molecular weight (Mn) of the olefin polymer (B) having a group reactive with a carbodiimide group, and the compound (b) having a group reactive with a carbodiimide group satisfy the above relationship, the occurrence of gelation by crosslinking ascribed to the carbodiimide group-containing compound (A) may be suppressed during the formation of the reaction product (I) between the carbodiimide group-containing compound (A) and the olefin polymer (B) having a group reactive with a carbodiimide group, or during the production of the thermoplastic elastomer composition, thus realizing stable production.

In the case where the olefin polymer (B) of the present invention having a group reactive with a carbodiimide group is obtained by graft polymerization, crosslinking tends to occur easily when the polyolefin that will form the graft main chain is a resin with a high ethylene content such as linear low-density polyethylene, as compared to when the main chain is a resin having a large amount of an $\alpha$-olefin comonomer such as ethylene/butene copolymer. Thus, when a resin having a high ethylene content is used as the graft main chain, the occurrence of gelation due to crosslinking may be suppressed to a greater extent with increasing proximity to 1 of the number of molecules of the compound having a group reactive with a carbodiimide group that are present on the polyolefin molecular chain, that is, with decreasing magnitude of the value calculated above.

The number average molecular weight may be determined by a general molecular weight measurement method for polymers such as a GPC method, a light scattering method, a low-angle light scattering photometry method, a vapor pressure osmometry method or a membrane osmometry method.

In the olefin polymer (B) having a group reactive with a carbodiimide group that is used in the present invention, the melt flow rate (MFR) measured at 190°C or 230°C under 2.16 kg load in accordance with ASTM D1238 is variable depending on the characteristics of the polar rubber (C) and the olefin polymer (D) that constitute the thermoplastic elastomer composition, but is usually 0.01 to 500 g/10 min, and preferably 0.05 to 300 g/10 min. When this range is satisfied, the compatibility between the polar rubber (C) and the olefin polymer (D) in the obtainable thermoplastic elastomer composition is advantageously further enhanced.

The density of the olefin polymer (B) having a group reactive with a carbodiimide group is usually 0.8 to 1.2 g/cm$^3$, preferably 0.8 to 1.1 g/cm$^3$, and more preferably 0.8 to 1.0 g/cm$^3$.

Of the olefin polymers (B) having a group reactive with a carbodiimide group that satisfy the above properties, preferred copolymers are maleic anhydride-grafted crystalline polyolefins such as polyethylene, polypropylene, polybutene-1, poly-4-methylpentene-1, and copolymers thereof with $\alpha$-olefins. For some types of the targets of compatibilization, polyethylene or polypropylene maleic anhydride graft copolymers are more preferable, and polypropylene maleic anhydride graft copolymer is more preferable.

The density of the olefin polymer (B) having a group reactive with a carbodiimide group is not particularly limited, but it is more preferable that the density be close to the density of the olefin polymer (D) optionally used to constitute the thermoplastic elastomer composition, be close to the density of the polar rubber (C), or fall between the density of the polar rubber (C) and the density of the olefin polymer (D).

The olefin polymer (B) having a group reactive with a carbodiimide group may be appropriately prepared by the graft copolymerization or the radical copolymerization described hereinabove, or may be purchased from the market. Examples of the commercially available polyolefins (B) having a group reactive with a carbodiimide group include ADMER (registered trademark) manufactured by MITSUI CHEMICALS, **INC.,** Orevac (registered trademark) manufactured by Arkema, and Polybond (registered trademark) manufactured by Addivant.

Polar rubbers (C)

The polar rubber (C) may be any rubber having polarity without limitation. Preferably, the rubber has, in its molecular structure, a polar group containing carbon (C), hydrogen (H) and further atoms such as nitrogen (N), oxygen (O), sulfur (S), halogens (F, Cl, Br, etc.) and phosphorus (P). More preferably, the rubber has such a polar group in a side chain thereof.

Specific examples of the polar rubbers (C) include carboxyl group-containing nitrile rubbers, hydrogenated products of carboxyl group-containing nitrile rubbers, nitrile rubbers, hydrogenated nitrile rubbers, carboxyl group-containing acrylic rubbers, epoxy group-containing acrylic rubbers, acrylic rubbers, carboxyl group-containing epichlorohydrin rubbers, epichlorohydrin rubbers, chloroprene rubbers, chlorosulfonated polyethylenes, chlorinated polyethylenes, polysulfide rubbers, fluororubbers and hydrogenated ethylenically unsaturated nitrile-conjugated diene rubbers. Of these, nitrile rubbers and carboxyl group-containing nitrile rubbers are particularly preferable.

The polar rubber (C) used in the present invention preferably has a number average molecular weight in the range of 5,000 to 2,000,000, and more preferably in the range of 10,000 to 500,000. In some use applications of the rubber composition, desired rubber strength properties may be advantageously obtained easily when the number average molecular weight is not less than the lower limit described above, and desired molding processability is advantageously obtained easily when the number average molecular weight is not more than the upper limit described above.

The Mooney viscosity ($ML_{1+4}$, 100°C) of the polar rubber (C) is preferably 10 to 200, and more preferably 20 to 150. When the Mooney viscosity is not less than the lower limit described above, desired rubber strength properties may be advantageously obtained easily. When the Mooney viscosity is not more than the upper limit described above, good handleability may be advantageously obtained in the uncrosslinked state, and desired processability and moldability are advantageously obtained easily.

It is desirable that the polar rubber (C) usually have a solubility parameter (an SP value) of 16.5 to 30 $(MPa)^{0.5}$, preferably 17 to 29 $(MPa)^{0.5}$, and more preferably 17.5 to 28 $(MPa)^{0.5}$.

The polar rubbers (C) may be used singly, or two or more may be used in combination.

The polar rubbers (C) according to the present invention are not particularly limited, but at least some of the polar rubbers are preferably amorphous elastic copolymers which can be crosslinked by the use of a crosslinking agent.

(Polar rubbers (C1) having group reactive with carbodiimide group)

In the thermoplastic elastomer composition of the present invention, the polar rubber (C) comprises a polar rubber (C1) having a group reactive with a carbodiimide group. In the present invention, the whole of the polar rubber (C) may be a polar rubber (C1) having a group reactive with a carbodiimide group, or part of the polar rubbers (C) may be a polar rubber (C1) having a group reactive with a carbodiimide group. Here, the group reactive with a carbodiimide group means an active hydrogen-containing group, or a group which is easily converted into an active hydrogen-containing group by the action of water.

For example, the polar rubber (C) having a group reactive with a carbodiimide group may be a polar rubber which has such a group reactive with a carbodiimide group as a carboxylic acid anhydride group, a carboxyl group (-COOH), a hydroxyl group (-OH) or a thiol group (-SH), and, in particular, may be a polar rubber having a carboxyl group.

Preferred examples of the polar rubbers (C1) having a group reactive with a carbodiimide group include carboxyl group-containing nitrile rubbers, hydrogenated products of carboxyl group-containing nitrile rubbers, carboxyl group-containing acrylic rubbers, epoxy group-containing acrylic rubbers, and carboxyl group-containing epichlorohydrin rubbers.

The polar rubbers (C1) having a group reactive with a carbodiimide group may be used singly, or two or more may be used in combination.

Since the polar rubber (C) that constitutes the thermoplastic elastomer composition of the present invention comprises the polar rubber (C1) having a group reactive with a carbodiimide group, the thermoplastic elastomer composition that is obtained contains a reaction product (II) formed between the carbodiimide group-containing compound (A) and the polar rubber (C1) having a group reactive with a carbodiimide group, although the reaction product may not be formed depending on the production conditions such as the order in which the ingredients are melt kneaded. When the thermoplastic elastomer composition contains such a reaction product (II), the compatibility of the components in the thermoplastic elastomer composition is advantageously further enhanced.

Olefin polymers (D)

The olefin polymer (D) that is used as required to constitute the thermoplastic elastomer composition of the present invention is a polymer or copolymer which principally includes olefin-derived structural units and has substantially no groups reactive with a carbodiimide group. The phrase "substantially no groups reactive with a carbodiimide group" means that the polymer does not actually react with the carbodiimide group in the carbodiimide group-containing compound (A) when the thermoplastic elastomer composition of the present invention has been prepared, or means that the content of such groups is so small that no contribution is made to the actions and effects according to the present invention.

Examples of the olefin polymers (D) include those described in the section of the polyolefin main chain that is the main chain of the olefin polymer (B) having a group reactive with a carbodiimide group. That is, the olefin polymer (D) used in the present invention may be a polymer or copolymer principally composed of a C2-C20 aliphatic α-olefin, cyclic olefin or nonconjugated diene, and may be preferably a polymer or copolymer principally composed of a C2-C10 α-olefin, more preferably a C2-C8 α-olefin. The olefin monomers may be used singly, or two or more may be used in combination. The comonomer content is usually not more than 50 mol%, preferably not more than 40 mol%, and more preferably not more than 30 mol%.

In the present invention, the olefin polymer (D) is usually a thermoplastic polyolefin resin.

In the present invention, the olefin polymer (D) may be preferably a homopolymer or a copolymer of any of ethylene, propylene, 1-butene, 4-methyl-1-pentene, 3-methyl-1-butene, 1-hexene, 1-octene, tetracyclododecene and norbornene. These polymers may have an isotactic structure or a syndiotactic structure, and are not particularly limited in terms of stereoregularity. The polyolefins described above may be produced by any conventionally known method, for example, by polymerization using a titanium catalyst, a vanadium catalyst, a metallocene catalyst, etc.

In the present invention, the olefin polymer (D) is preferably a polypropylene polymer. The polypropylene polymer may be preferably a propylene polymer selected from, for example, propylene homopolymer and copolymers of propylene and other $\alpha$-olefins. When the olefin polymer (D) is a polypropylene polymer, the melt flow rate (MFR) thereof measured in accordance with ASTM D1238 at 2.16 kgf and 230°C is desirably in the range of 0.01 to 500 g/10 min, preferably 0.05 to 200 g/10 min, and more preferably 0.1 to 100 g/10 min.

Crosslinking agents (E)

The crosslinking agent (E) according to the present invention is a crosslinker capable of crosslinking the polar rubber (C) described hereinabove. The crosslinking agent (E) may be any of various known crosslinking agents generally used in the crosslinking of rubbers. Specific examples of the crosslinking agents include organic peroxides, phenolic resins, sulfur compounds, hydrosilicone compounds, amino resins, quinones and derivatives thereof, amine compounds, azo compounds, epoxy compounds, thiourea compounds, thiazole compounds, triazine compounds and isocyanates. Of these, preferred crosslinking agents are, among others, organic peroxides, phenolic resins and sulfur compounds.

Examples of the organic peroxides include dicumyl peroxide, di-tert-butyl peroxide, 2,5-di-(tert-butylperoxy)hexane, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butyl peroxybenzoate, tert-butyl peroxyisopropyl carbonate, diacetyl peroxide, lauroyl peroxide and tert-butyl cumyl peroxide.

Of the above peroxides, bifunctional organic peroxides are preferable such as 2,5-di-(tert-butylperoxy)hexane, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane and n-butyl-4,4-bis(tert-butylperoxy)valerate, with 2,5-di-(tert-butylperoxy)hexane, 2,5-dimethyl-2,5-di-(tert-butylperoxy)hexane and 2,5-dimethyl-2,5-di-(tert-butylperoxy)hexyne-3 being most preferable.

When the organic peroxide is used as the crosslinking agent (E), it is preferable that a crosslinking aid be used together. Examples of such crosslinking aids include sulfur, quinone dioxime crosslinking aids such as p-quinone dioxime; acrylic crosslinking aids such as ethylene glycol dimethacrylate and trimethylolpropane trimethacrylate; allyl crosslinking aids such as diallyl phthalate and triallyl isocyanurate; other maleimide crosslinking aids; divinylbenzene; and metal oxides such as zinc oxide (for example, ZnO#1, JIS Grade 2 zinc oxide, manufactured by HAKUSUI TECH CO., LTD.) and magnesium oxide. The amount of the crosslinking aid is usually 0.01 to 10 mol, preferably 0.1 to 7 mol, and more preferably 0.5 to 5 mol per mol of the organic peroxide.

Examples of the phenolic resin crosslinking agents include resole resins obtained by condensing an alkyl-substituted or unsubstituted phenol with an aldehyde (preferably formaldehyde) in the presence of an alkali catalyst. The alkyl group in the alkyl-substituted phenol is preferably an alkyl group having 1 to 10 carbon atoms. Further, dimethylol phenols and phenolic resins which are each substituted at the p-position with an alkyl group having 1 to 10 carbon atoms are preferable. Crosslinking with a phenolic resin crosslinking agent is described in, for example, US Pat. No. 4,311,628, US Pat. No. 2,972,600 and US Pat. No. 3,287,440.

The phenolic resin crosslinking agents are also available as commercial products. Examples of such commercial products include TACKIROL 201, TACKIROL 250-I and TACKIROL 250-III manufactured by Taoka Chemical Co., Ltd.; SP1045, SP1055 and SP1056 manufactured by SI Group; SHONOL CRM manufactured by SHOWA DENKO K.K.; TAMANOL 531 manufactured by ARAKAWA CHEMICAL INDUSTRIES, LTD.; SUMILITERESIN PR manufactured by SUMITOMO BAKELITE CO., LTD.; and RESITOP manufactured by Gun Ei Chemical Industry Co., Ltd. (trade names). Two or more of these crosslinking agents may be used in combination. In particular, TACKIROL 250-III (brominated alkylphenol formaldehyde resin) manufactured by Taoka Chemical Co., Ltd., and SP1055 (brominated alkylphenol formaldehyde resin) manufactured by SI Group are preferable.

When the phenolic resin crosslinking agent is used as the crosslinking agent (E), it is preferable that a crosslinking aid be used together. Examples of such crosslinking aids include metal halides such as stannous chloride and ferric chloride, halogen-containing polymers such as chloroprene rubber and halogenated butyl rubber, and metal oxides such as zinc oxide (for example, ZnO #1, JIS Grade 2 zinc oxide, manufactured by HAKUSUI TECH CO., LTD.) and magnesium oxide.

Examples of the sulfur compounds (vulcanizing agents) include sulfur, sulfur chloride, sulfur dichloride, morpholine disulfide, alkylphenol disulfides, tetramethylthiuram disulfide and selenium dithiocarbamate.

When the sulfur compound is used as the crosslinking agent (E), it is preferable that a vulcanization accelerator be used together. Examples of such vulcanization accelerators include thiazole vulcanization accelerators such as N-cyclohexyl-2-benzothiazole sulfenamide, N-oxydiethylene-2-benzothiazole sulfenamide, N,N'-diisopropyl-2-benzothiazole sulfenamide, 2-mercaptobenzothiazole **(e.g.** SANCELER M (trade name; manufactured by SANSHIN CHEMICAL INDUSTRY **CO., LTD.)),** 2-(4-morpholinodithio)benzothiazole **(e.g.** NOCCELER MDB-P (trade name; manufactured by OUCHI SHINKO CHEMICAL INDUSTRIAL CO., LTD.)), 2-(2,4-dinitrophenyl)mercaptobenzothiazole, 2-(2,6-diethyl-4-morpholinothio)benzothiazole and dibenzothiazyl disulfide **(e.g.** SANCELER DM (trade name; manufactured by SANSHIN CHEMICAL INDUSTRY **CO.,** LTD.)); guanidine vulcanization accelerators such as diphenylguanidine, triphenylguanidine and diorthotolylguanidine; aldehyde amine vulcanization accelerators such as acetaldehyde-aniline condensate and butylaldehyde-aniline condensate; imidazoline vulcanization accelerators such as 2-mercaptoimidazoline; thiourea vulcanization accelerators such as diethylthiourea and dibutylthiourea; thiuram vulcanization accelerators such as tetramethylthiuram monosulfide (e.g. SANCELER TS (trade name; manufactured by SANSHIN CHEMICAL INDUSTRY CO., LTD.)), tetramethylthiuram disulfide (e.g. SANCELER TT (trade name; manufactured by SANSHIN CHEMICAL INDUSTRY CO., LTD.)), tetraethylthiuram disulfide (e.g. SANCELER TET (trade name; manufactured by SANSHIN CHEMICAL INDUSTRY CO., LTD.)), tetrabutylthiuram disulfide (e.g. SANCELER TBT (trade name; manufactured by SANSHIN CHEMICAL INDUSTRY CO., LTD.)) and dipentamethylenethiuram tetrasulfide (e.g. SANCELER TRA (trade name; manufactured by SANSHIN CHEMICAL INDUSTRY CO., LTD.)) ; dithioic acid salt vulcanization accelerators such as zinc dimethyldithiocarbamate, zinc diethyldithiocarbamate, zinc dibutyldithiocarbamate (e.g. SANCELER PZ, SANCELER BZ and SANCELER EZ (trade names; manufactured by SANSHIN CHEMICAL INDUSTRY CO., LTD.)) and tellurium diethyldithiocarbamate; thiourea vulcanization accelerators such as ethylenethiourea (e.g. SANCELER BUR (trade name; manufactured by SANSHIN CHEMICAL INDUSTRY CO., LTD.)), SANCELER 22-C (trade name; manufactured by SANSHIN CHEMICAL INDUSTRY CO., LTD.)) and N,N'-diethylthiourea; xanthate vulcanization accelerators such as zinc dibutylxanthate; and others such as zinc oxide (e.g. META-Z102 (trade name; manufactured by Inoue Calcium Corporation, zinc oxide)).

When the sulfur compound is used as the crosslinking agent (E), it is also preferable that a vulcanization aid be used together. Examples of the vulcanization aids include zinc oxide (for example, ZnO #1, JIS Grade 2 zinc oxide, manufactured by HAKUSUI TECH CO., LTD.) and magnesium oxide.

Of the crosslinking agents (E) described above that are used in the thermoplastic elastomer composition of the present invention, the organic peroxide crosslinking agents or the phenolic resin crosslinking agents are preferably used.

The thermoplastic elastomer composition of the present invention contains, as ingredients thereof, the polar rubber (C) described hereinabove and the crosslinking agent (E) capable of crosslinking the polar rubber (C). At least part of the polar rubber (C) usually forms a crosslinked structure in the thermoplastic elastomer composition that is obtained by the dynamic heat treatment of the ingredients. That is, the thermoplastic elastomer composition of the present invention usually contains a crosslinked product of the polar rubber (C). The thermoplastic elastomer composition of the present invention, by virtue of its containing a crosslinked product of the polar rubber, i.e., a crosslinked polar rubber, attains favorable elasticity and is also excellent in chemical resistance.

Further, the thermoplastic elastomer composition of the present invention may have a crosslinked structure formed by any of the polar rubber (C) described hereinabove, the reaction product (II), and a ternary reaction product (III) formed of the carbodiimide group-containing compound (A), the olefin polymer (B) having a group reactive with a carbodiimide group and the polar rubber (C), or may have a crosslinked structure formed between the reaction product (II) or the reaction product (III) and the polar rubber (C). When two or more kinds of components are crosslinked together in the thermoplastic elastomer composition of the present invention, the components of the thermoplastic elastomer composition advantageously attain higher compatibility with one another and are unlikely to separate from one another.

Additional components

The thermoplastic elastomer composition of the present invention may include additional components as ingredients other than the carbodiimide group-containing compound (A), the olefin polymer (B) having a group reactive with a carbodiimide group, the polar rubber (C), the olefin polymer (D) and the crosslinking agent (E) without impairing the object of the present invention.

Specifically, the thermoplastic elastomer composition of the present invention may include additional resins, for example, elastomers without impairing the object of the present invention. Further, the thermoplastic elastomer composition of the present invention may include known plasticizers (F), known crosslinking aids (G) and known additives (H) such as softeners, tackifiers, antioxidants, processing aids, adhesion improvers, inorganic fillers, inorganic fibers such as glass fibers, organic fibers such as acrylic fibers, PET fibers, PEN fibers, kenaf and plant fibers, organic fillers, heat stabilizers, weather stabilizers, antistatic agents, colorants, lubricants, flame retardants, anti-blooming agents, reinforcing agents, activators, hygroscopic agents, coloring agents and thickeners, without impairing the object of the present invention.

Of these additional components, the thermoplastic elastomer composition of the present invention preferably includes a plasticizer (F) and/or a crosslinking aid (G). The plasticizer (F) may be any known plasticizer without limitation, with examples including phthalic acid ester plasticizers such as dibutyl phthalate and dioctyl phthalate; aliphatic dibasic acid ester plasticizers such as dioctyl adipate and dibutyl sebacate; trimellitic acid ester plasticizers such as tridecyl trimellitate; aliphatic dibasic acid ether ester plasticizers such as dibutoxyethoxyethyl adipate; ether ester plasticizers; polyester plasticizers; phosphoric acid ester plasticizers; epoxy plasticizers such as epoxidized soybean oil and epoxidized linseed oil; petroleum materials such as process oils, lubricating oils, aromatic oils, naphthenic oils, paraffinic oils, liquid paraffins and vaselines: coal tars such as coal tars and coal tar pitches; fatty oils such as castor oil, linseed oil, rapeseed oil, soybean oil and coconut oil; waxes such as tall oil, beeswax and lanolin; fatty acids and metal salts thereof such as ricinoleic acid, palmitic acid, stearic acid and calcium stearate; synthetic polymer materials such as petroleum resins, coumarone indene resins and atactic polypropylenes; and other materials such as microcline waxes, rubber substitutes (factices), liquid polybutadienes, modified liquid polybutadienes and liquid Thiokols. Of these, ester plasticizers such as phthalic acid ester plasticizers, aliphatic dibasic acid ether ester plasticizers and ether ester plasticizers are preferable from the point of view of affinity with the polar rubber (C). Examples of the crosslinking aids (G) include those crosslinking aids described hereinabove in the section of the crosslinking agents (E), but are not limited thereto.

These additional components may be added as ingredients at the start of the production of the thermoplastic elastomer composition, may be added during the dynamic heat treatment of the ingredients, or may be added to the thermoplastic elastomer composition that has been produced.

Quantitative ratio of components

Desirably, the thermoplastic elastomer composition of the present invention is obtained using the carbodiimide group-containing compound (A) in the range of preferably 0.01 to 20 parts by mass, and more preferably 0.01 to 15 parts by mass with respect to the total of the olefin polymer (B) having a group reactive with a carbodiimide group, the polar rubber (C) and the olefin polymer (D) taken as 100 parts by mass.

The thermoplastic elastomer composition of the present invention is obtained using, as ingredients, the carbodiimide group-containing compound (A) in a proportion of 0.01 to 30 mass%, and preferably 0.01 to 20 mass%, the olefin polymer (B) having a group reactive with a carbodiimide group in a proportion of 0.05 to 70 mass%, and preferably 0.1 to 60 mass%, the polar rubber (C) in a proportion of 10 to 95 mass%, and preferably 20 to 90 mass%, and the olefin polymer (D) in a proportion of 0 to 85 mass%, preferably 2 to 85 mass%, and more preferably 4 to 70 mass%, with respect to the total of the carbodiimide group-containing compound (A), the olefin polymer (B) having a group reactive with a carbodiimide group, the polar rubber (C) and the olefin polymer (D) taken as 100 mass%.

Further, it is desirable that the thermoplastic elastomer composition of the present invention be obtained using (or include) the carbodiimide group-containing compound (A) in the range of preferably 0.03 to 25 parts by mass with respect to the total of the olefin polymer (B) having a group reactive with a carbodiimide group and the optional olefin polymer (D) taken as 100 parts by mass.

Further, the thermoplastic elastomer composition of the present invention is desirably such that the mass ratio of the polar rubber (C) to the total of the olefin polymer (B) having a group reactive with a carbodiimide group and the optional olefin polymer (D), (C):{(B) + (D) }, is usually 1:99 to 99:1, and preferably 5:95 to 95:5.

When the thermoplastic elastomer composition of the present invention includes the olefin polymer (D), the blending ratio of the polar rubber (C) to the olefin polymer (D) in the thermoplastic elastomer composition is in accordance with appended claim 1. It is desirable that the mass ratio (C) : (D) of these ingredients be usually 1:99 to 99:1, and preferably 5:95 to 95:5, provided that it is in accordance with appended claim 1. For example, the thermoplastic elastomer composition of the present invention may include the polar rubber (C) and the olefin polymer (D) in a mass ratio (C) : (D) of 51:49 to 99:1, or in a mass ratio of 30:70 to 70:30.

The thermoplastic elastomer composition of the present invention desirably contains the crosslinking agent (E) usually in an amount of 0.01 to 15 parts by mass, and preferably 0.05 to 10 parts by mass per 100 parts by mass of the polar rubber (C), although variable depending on the types of the polar rubber (C) and the crosslinking agent (E).

When the thermoplastic elastomer composition of the present invention contains the plasticizer (F), it is desirable that the content of the plasticizer (F) be usually 1 to 150 parts by mass, and preferably 3 to 100 parts by mass per 100 parts by mass of the polar rubber (C).

((Thermoplastic elastomer compositions and methods for production thereof))

The thermoplastic elastomer composition of the present invention is obtained by dynamically heat treating the carbodiimide group-containing compound (A), the olefin polymer (B) having a group reactive with a carbodiimide group, the polar rubber (C), the optional olefin polymer (D), and the crosslinking agent (E) capable of crosslinking the polar rubber (C). Where necessary, the thermoplastic elastomer composition of the present invention may contain the additional components described hereinabove. The proportions of the components in the thermoplastic elastomer composition of the present invention are not particularly limited and are preferably as described hereinabove.

The thermoplastic elastomer composition of the present invention may be produced by any method without limitation as long as it is produced through steps in which the ingredient components are mixed and dynamically heat treated. For example, the thermoplastic elastomer composition of the present invention may be produced by a method in which the components are melt-kneaded all at once or sequentially. That is, the thermoplastic elastomer composition of the present invention may be prepared by blending the ingredient components at once and dynamically heat treating the mixture, or by adding the components sequentially in any order while dynamically heat treating the mixture. The dynamic heat treatment is preferably melt kneading, although not limited thereto.

Specifically, for example, a method may be adopted in which the ingredients as the components of the thermoplastic elastomer composition are dry blended and the blend is melt-kneaded with a single-screw or twin-screw extruder, a Banbury mixer, a roll, or a kneader. The melt-kneading is preferably performed at a temperature at which the components are molten, and is preferably performed at a temperature higher than the highest melting point of the melting points of the ingredients that are melt-kneaded. The melt-kneading may be usually performed at a temperature in the range of 130 to 400°C, and preferably 160 to 280°C.

The thermoplastic elastomer composition of the present invention is obtained using, as ingredients, the carbodiimide group-containing compound (A) and the compound (B) containing a group reactive with a carbodiimide group. Thus, it is probable that during melt-kneading the carbodiimide group-containing compound (A) reacts at least partially with the "groups reactive with a carbodiimide group" possessed by the olefin polymer (B) having a group reactive with a carbodiimide group, and the thermoplastic composition that is obtained sometimes includes a reaction product (I) formed between the carbodiimide group-containing compound (A) and the olefin polymer (B) having a group reactive with a carbodiimide group. This reaction product (I) has a polyolefin chain derived from the olefin polymer (B) having a group reactive with a carbodiimide group, and also has a carbodiimide group. The reaction product (I) exhibits excellent compatibility with the polar rubber (C) which stems from the carbodiimide group that is a polar group, and also has excellent compatibility with the optional olefin polymer (D) by virtue of its containing the polyolefin chain. Thus, when the olefin polymer (D) is present in the thermoplastic elastomer composition of the present invention, the polar rubber (C) and the olefin polymer (D) are mixed together to a high degree and are excellently dispersed relative to each other in the thermoplastic elastomer composition as compared to when these two are simply mixed together. It is therefore preferable that the thermoplastic elastomer composition of the present invention contain a reaction product (I) formed between the carbodiimide group-containing compound (A) and the olefin polymer (B) having a group reactive with a carbodiimide group.

Further, the thermoplastic elastomer composition of the present invention contains, as ingredients, the polar rubber (C) and the crosslinking agent (E) capable of crosslinking the polar rubber (C). Thus, at least part of the polar rubber (C) forms a crosslinked structure in the thermoplastic elastomer composition of the present invention. That is, the thermoplastic elastomer composition of the present invention usually contains a crosslinked polar rubber that is a crosslinked product of the polar rubber (C). In the thermoplastic elastomer composition of the present invention, the crosslinked polar rubber resulting from the crosslinking of the polar rubber (C), and the optional olefin polymer (D) are highly dispersed.

Further, the thermoplastic elastomer composition of the present invention may have a crosslinked structure formed by any of the polar rubber (C) described hereinabove, the reaction product (II) and the reaction product (III), or may have a crosslinked structure formed between the reaction product (II) or the reaction product (III) and the polar rubber (C). That is, the thermoplastic elastomer composition of the present invention may include a crosslinked product formed of two or more kinds of components crosslinked with one another.

The thermoplastic elastomer composition of the present invention exhibits favorable elasticity and excellent chemical resistance as a result of its containing the crosslinked products, and also has excellent moldability stemming from the olefin polymer (D) optionally added. Further, the thermoplastic elastomer composition of the present invention is advantageous in that the components constituting the composition are highly dispersed and are unlikely to separate from one another, probably because, for example, the reaction product (I), the reaction product (II), etc. generated in the thermoplastic elastomer composition serve as compatibilizers, and at least part of the ingredients form crosslinked structures and are entangled with each other.

In the thermoplastic elastomer composition of the present invention, the crosslinked polar rubber resulting from the crosslinking of the polar rubber (C), and the optional olefin polymer (D) are highly dispersed. Further, the thermoplastic elastomer composition exhibits excellent moldability, and molded articles obtained from the thermoplastic elastomer composition have excellent elasticity, and exhibit oil resistance and chemical resistance. In the thermoplastic elastomer composition of the present invention, the high-level dispersion of the components, especially the crosslinked polar rubber and the optional olefin polymer (D), may be easily confirmed by, for example, observing the surface or a cross section of a molded article obtained from the thermoplastic elastomer composition with a microscope and verifying that the size of the dispersed particles is sufficiently small.

The thermoplastic elastomer composition of the present invention desirably shows a matrix-domain structure when observed with a scanning electron microscope (SEM) at a magnification of 200 times or more, for example, at a magnification of 1000 times, and the average particle size of the domains is preferably in the range of 0.01 to 20 $\mu$m, and more preferably 0.01 to 10 $\mu$m.

Molded articles

A molded article of the present invention includes the thermoplastic elastomer composition of the present invention described hereinabove. The molded article of the present invention includes the thermoplastic elastomer composition of the present invention at least as a portion thereof.

The molded article of the present invention may be produced by any known method without limitation such as, for example, injection molding, press molding or extrusion.

The molded article of the present invention may be produced easily with good moldability offered by the thermoplastic elastomer composition of the present invention described hereinabove, and has excellent mechanical characteristics such as flexibility, elasticity and tensile strength at break, and also excellent oil resistance and chemical resistance.

EXAMPLES

Hereinbelow, the present invention will be described in greater detail based on Examples.

(Measurement/evaluation methods)

In Examples and Comparative Examples, properties were measured or evaluated as follows.

Number average molecular weight (Mn)

The number average molecular weight (Mn) was measured by gel permeation chromatography (GPC). The measurement was performed in the following manner using gel permeation chromatograph Alliance GPC-2000 manufactured by Waters. The separation columns used were two TSKgel GMH6-HT columns and two TSKgel GMH6-HTL columns. The columns were each 7.5 mm in diameter and 300 mm in length. The column temperature was 140°C. The mobile phase consisted of o-dichlorobenzene (Wako Pure Chemical Industries, Ltd.) and 0.025 wt% BHT (Takeda Pharmaceutical Company Limited) as oxidation inhibitor, and was moved at 1.0 mL/min. The sample concentration was 15mg/10 mL, and the sample injection volume was 500 $\mu$L. A differential refractometer was used as the detector. Standard polystyrenes manufactured by TOSOH CORPORATION were used for molecular weights of Mw < 1000 and Mw > $4 \times 10^6$, and those manufactured by Pressure Chemical Co. were used for molecular weights of $1000 \leq Mw \leq 4 \times 10^6$. The molecular weight of maleic anhydride-modified polypropylene was calculated in terms of polypropylene.

Tensile strength at break (TB) (MPa) and elongation at break (EB) (%)

A thermoplastic elastomer composition was press-molded at 210°C to give a pressed sheet having a length of 200 mm, a width of 200 mm and a thickness of 2 mm. The pressed sheet was punched to give a dumbbell-shaped (JIS No. 3) test piece. The test piece was tested in accordance with JIS K6251 (2010) at a tensile speed of 500 mm/min to determine the tensile strength (TB) and the elongation (EB).

Compression set (CS)

A pressed sheet fabricated from a thermoplastic elastomer composition using a press-molding machine was compressed by 25% using a spacer in accordance with JIS K6262, and was heat treated at 70°C for 24 hours. The treated sheet was allowed to stand in a thermostatic chamber at 23°C for 30 minutes. Thereafter, the thickness was measured, and the compression set (CS) was calculated from the following equation:

$$CS = [(t0 - t1)/(t0 - t2)] \times 100$$

CS: compression set (%)
t0: original thickness (mm) of the pressed sheet

t1: thickness (mm) of the pressed sheet after being allowed to stand for 30 minutes

t2: thickness (mm) of the pressed sheet under application of compressive strain

Particle size

A sample obtained by staining resin components with ruthenium tetraoxide was photographed on a scanning electron microscope (measurement device: JSM-7001F manufactured by JEOL Ltd.) at magnifications of x500 to x3000. The images thus obtained were analyzed.

The image analysis was performed by binarization using image analysis software Image J. In the images, the regions occupied by a polypropylene resin and by polar rubber particles were identified.

Each of the regions, on the image, occupied by the particles was analyzed to calculate the area. The diameter of a true circle having the same area as the calculated area was determined. Such diameter values determined with respect to all the occupied regions were arithmetically averaged to give the measured value of average particle size of the particles. Specifically, the particle size of each particle was determined by measuring the area S of the particle and calculating $(4S/\pi)^{0.5}$.

Shore A hardness

A pressed sheet 2 mm in thickness was tested in accordance with JIS K6253 using a Shore hardness meter (a Shore A hardness meter) .

Taber abrasion test

A shape of a test piece punched out from a 2 mm thick pressed sheet was tested in accordance with JIS K7204 using a CS-17 abrading wheel under conditions of 9.8 N, 60 rpm and 1000 rotations to determine the abrasive weight loss (mg).

Oil resistance test

A test piece was immersed in IRM 903 oil at 125°C for 72 hours in accordance with JIS K6258, and the volume change $\Delta V$ (%) after the immersion test was determined.

Gehman torsion test

A shape of a test piece punched out from a 2 mm thick pressed sheet was tested in accordance with JIS K6261 using a Gehman torsion tester to evaluate the torsional rigidity. Ethanol was used as the heating medium, and the measurement was performed in increments of 5°C. The temperature t10 (the temperature at which the specific modulus (180 - x)/x was 10 times that at room temperature) was determined.

Fuel immersion test

A 30 mm $\times$ 30 mm test piece cut out from a 2 mm thick pressed sheet was immersed in Fuel C (isooctane/toluene = 50/50 mass%) or CE20 (ethanol/isooctane/toluene = 20/40/40 mass%) at a temperature of 40°C for 72 hours. The volume change (%) was calculated from the volumes before and after the test.

Fuel permeation test (cup method)

Approximately 10 mL of Fuel C (isooctane/toluene = 50/50 mass%) or CE20 (ethanol/isooctane/toluene = 20/40/40 mass%) was placed into a 30 mm $\phi$ special cup made of SUS (permeation area: 7.07 cm$^2$). The cup was tightly closed with a test piece as a lid which had been fabricated from a 2 mm thick pressed sheet. The cups were held in a nitrogen atmosphere kept at a temperature of 40°C $\pm$ 2°C and a humidity of 0% RH together with corrective blank cups which contained the same amount of Fuel C or CE20 and was tightly closed with an aluminum lid in place of the pressed sheet. The weight changes were measured at regular intervals (once/day). The test was carried out continuously for at least 144 hours. The weight change after the deduction of the value of the corrective blank cup was obtained as the amount of weight change at that time point. The amount of weight change obtained was plotted against time, and the permeability (g/ (m$^2$·24h)) was calculated by dividing the slope of the straight line by the permeation area. Further, the permeation coefficient (g ·mm/(m$^2$·24 h)) was determined by multiplying the actual thickness (mm) measured of the pressed sheet used in the measurement, by the permeability.

Static ozone deterioration test

In accordance with the static ozone deterioration test specified in JIS K6259, a test piece (a dumbbell-shaped No. 1 specimen specified in JIS K6251) punched out from a 2 mm thick pressed sheet was held under 20% strain in an atmosphere at a temperature of 40 ± 2°C and an ozone concentration of 50 ± 5 pphm. The surface was inspected for cracks at regular intervals. The test was performed for 72 hours at maximum.

[Production Example 1]

(Production of maleic anhydride-modified polypropylene (B-1)⟩

100 Parts by mass of polypropylene 1 (trade name: Prime Polypro (registered trademark) F327 manufactured by Prime Polymer Co., Ltd.) was mixed together with 1 part by mass of maleic anhydride (manufactured by FUJIFILM Wako Pure Chemical Corporation) and 0.25 parts by mass of 2,5-dimethyl-2,5-bis(tert-butylperoxy)hexyne-3 (trade name: PERHEXYNE 25B manufactured by NOF CORPORATION). The mixture was extruded through a twin-screw kneader (TEX-30 manufactured by The Japan Steel Works, LTD., L/D = 40, using a vacuum vent) at a cylinder temperature of 220°C, a screw rotational speed of 200 rpm and a throughput of 80 g/min. Maleic anhydride-modified polypropylene (B-1) was thus obtained. The maleic anhydride-modified polypropylene (B-1) obtained was dissolved into xylene, and the resultant xylene solution was poured into acetone to reprecipitate and purify the polymer. The amount of maleic anhydride grafts was measured by IR to be 0.7 mass%. The number average molecular weight (Mn) was measured by GPC to be Mn = 28,000.

[Example 1]

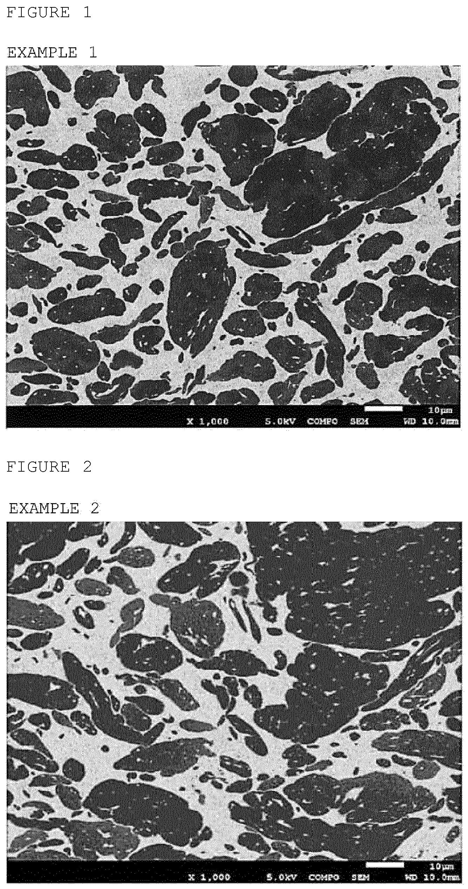

Example 1 is a reference example. As the first step, polycarbodiimide (A-1) as a carbodiimide group-containing compound (trade name: CARBODILITE HMV-15CA manufactured by Nisshinbo Chemical Inc., carbodiimide equivalent: 262 g), the maleic anhydride-modified polypropylene (B-1) obtained in Production Example 1, and polypropylene (D-1) (trade name: Prime Polypro (registered trademark) F113G manufactured by Prime Polymer Co., Ltd., MFR: 3.0 g/10 min) were introduced into an extruder (TEX44 manufactured by The Japan Steel Works, LTD., L/D = 70) in the amounts (parts by mass) described in Table 1 and were melt-kneaded at a cylinder temperature of 290°C, a screw rotational speed of 760 rpm, and a throughput of 1.33 kg/min. Thus, a composition was obtained which included a reaction product (a contact product) formed between the polycarbodiimide (A-1) and the maleic anhydride-modified polypropylene (B-1), and the polypropylene (D-1).
Next, as the second step, nitrile rubber (C-1) as a polar rubber (Nipol 1042 manufactured by Zeon Corporation, NBR, Mooney viscosity: 77.5, bound acrylonitrile content: 33.5, SP value: about 20), plasticizer (F-1) (ADEKA CIZER RS-107 manufactured by ADEKA CORPORATION), additive (H-1) (Irganox 1010 manufactured by BASF, phenolic antioxidant) and the composition obtained above were introduced into an intermeshing kneader (BB-L3200IM manufactured by KOBE STEEL, LTD., mixer size: 3.6 L) in the amounts (parts by mass) described in Table 1 and were melt-kneaded at 120 rpm. Subsequently, as the third step, crosslinking agent (E-1) (PERHEXA 25B manufactured by NOF CORPORATION, organic peroxide crosslinking agent) and crosslinking aid (G-1) (DVB-810 manufactured by NS Styrene Monomer Co., Ltd., divinylbenzene crosslinking aid) were added in the amounts (parts by mass) described in Table 1, and the mixture was dynamically crosslinked at 100 to 250°C to give thermoplastic elastomer composition 1. The thermoplastic elastomer composition 1 weighed about 3 kg/batch. Here, the amount of the polycarbodiimide (A-1) added was 6.7 parts by mass with respect to the total of the maleic anhydride-modified polypropylene (B-1) and the polypropylene (D-1) taken as 100 parts by mass.
A molded sample made of the thermoplastic elastomer composition 1 was observed by SEM (measurement apparatus: JSM-7001F manufactured by JEOL Ltd., magnification: x1000) to measure the average particle size. Further, the thermoplastic elastomer composition 1 was pressed at 210°C to a thickness of 2 mm and punched into various shapes of test pieces, which were tested by the aforementioned test methods to measure the properties. The results are described in Table 1. The x1000 SEM image is shown in Fig. 1.

[Example 2]

Example 2 is a reference example. As the first step, the polycarbodiimide (A-1) as a carbodiimide group-containing compound, the maleic anhydride-modified polypropylene (B-1) obtained in Production Example 1, and the polypropylene (D-1) were introduced into the extruder in the amounts (parts by mass) described in Table 1 and were melt-kneaded under the same conditions as in Example 1 to give a composition which included a reaction product (a contact product) formed between the polycarbodiimide (A-1) and the maleic anhydride-modified polypropylene (B-1), and the polypropylene (D-1).

Next, as the second step, the polypropylene (D-1), the nitrile rubber (C-1), the plasticizer (F-1), the additive (H-1) and the composition obtained above were introduced into the intermeshing kneader in the amounts (parts by mass) described in Table 1 and were melt-kneaded at 120 rpm. Subsequently, as the third step, the crosslinking agent (E-1) and the crosslinking aid (G-1) were added, and the mixture was dynamically crosslinked under the same conditions as in Example 1 to give thermoplastic elastomer composition 2. The thermoplastic elastomer composition 2 weighed about 3 kg/batch. Here, the amount of the polycarbodiimide (A-1) added was 2.4 parts by mass with respect to the total of the maleic anhydride-modified polypropylene (B-1) and the polypropylene (D-1) used in the first and the second steps taken as 100 parts by mass. The properties of the thermoplastic elastomer composition 2 were measured in the same manner as in Example 1. The results are described in Table 1. The x1000 SEM image is shown in Fig. 2.

[Examples 3 and 4]

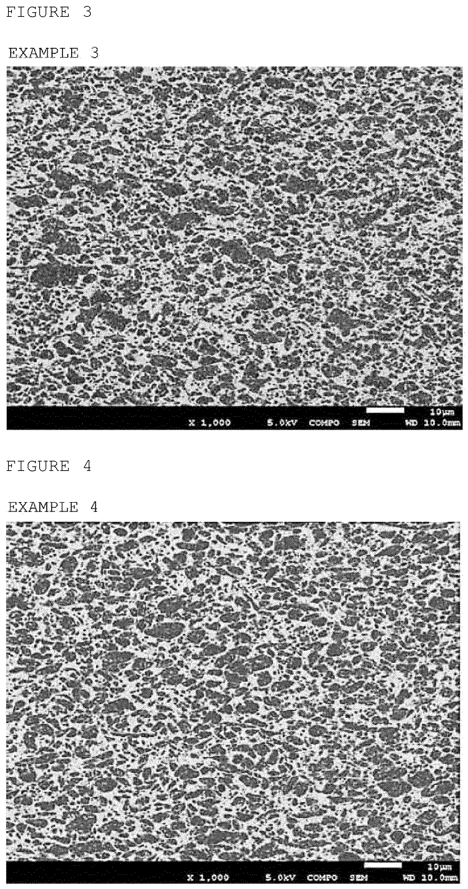

Thermoplastic elastomer compositions 3 and 4 were produced and their properties were measured in the same manner as in Example 2, except that a portion of the nitrile rubber (C-1) as a polar rubber used in Example 2 was replaced by the amount (parts by mass) described in Table 1 of polar rubber (C1-1) having a group reactive with a carbodiimide group (Nipol NX775 manufactured by Zeon Corporation, carboxyl group-containing NBR, Mooney viscosity: 44.0, bound acrylonitrile content: 26.7, SP value: about 20). The thermoplastic elastomer compositions 3 and 4 each weighed about 3 kg/batch. The results are described in Table 1. The x1000 SEM images are shown in Figs. 3 and 4, respectively.

[Example 5]

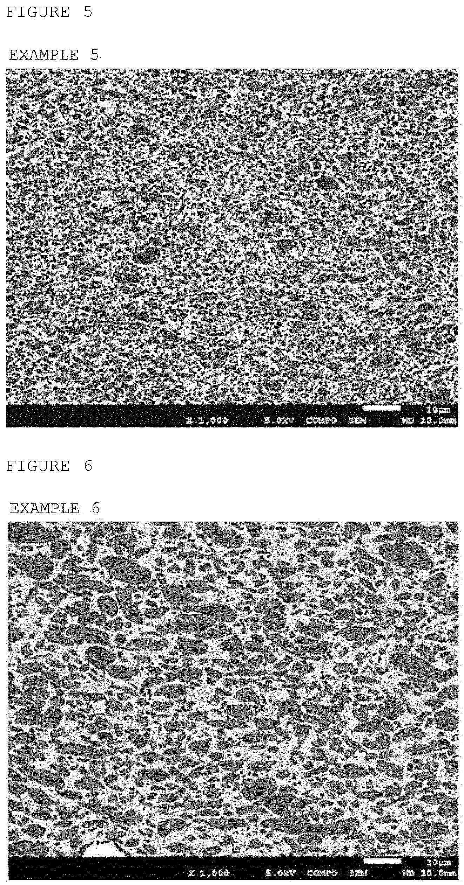

Thermoplastic elastomer composition 5 was produced and its properties were measured in the same manner as in Example 4, except that the amounts of the crosslinking agent (E-1) and the crosslinking aid (G-1) used in Example 4 were changed to the amounts (parts by mass) described in Table 1. The thermoplastic elastomer composition 5 weighed about 3 kg/batch. The results are described in Table 1. The x1000 SEM image is shown in Fig. 5.

[Examples 6, 8 and 9]

Thermoplastic elastomer compositions 6, 8 and 9 were produced and their properties were measured in the same manner as in Example 1, except that the amounts of the polycarbodiimide (A-1) and the maleic anhydride-modified polypropylene (B-1) used in Example 2 were changed to the amounts (parts by mass) described in Table 1, a portion of the nitrile rubber (C-1) as a polar rubber was replaced by the amount (parts by mass) described in Table 1 of polar rubber (C1-1) having a group reactive with a carbodiimide group (Nipol NX775 manufactured by Zeon Corporation, carboxyl group-containing NBR, Mooney viscosity: 44.0, bound acrylonitrile content: 26.7, SP value: about 20), and the amounts of the plasticizer (F-1), the crosslinking agent (E-1) and the crosslinking aid (G-1) were changed to the amounts (parts by mass) described in Table 1. The thermoplastic elastomer compositions 6, 8 and 9 each weighed about 3 kg/batch. The results are described in Table 1. The x1000 SEM images are shown in Figs. 6, 8 and 9, respectively.

[Example 7]

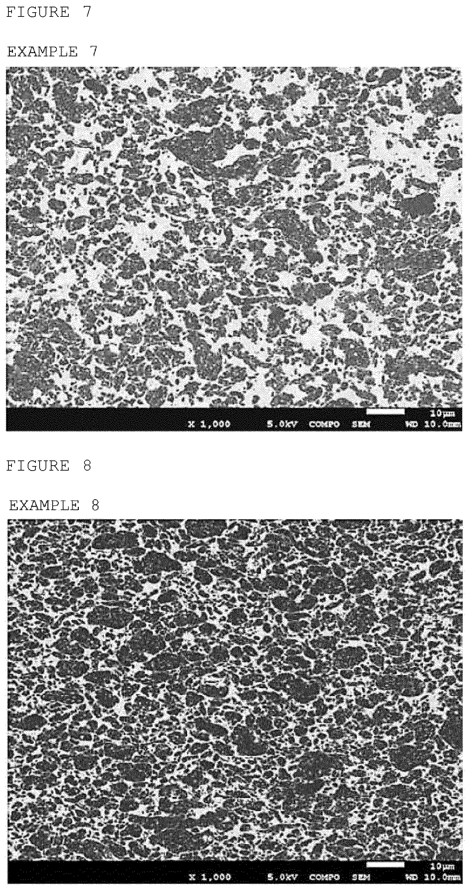

Thermoplastic elastomer composition 7 was produced and its properties were measured in the same manner as in Example 6, except that the crosslinking agent (E-1) and the crosslinking aid (G-1) used in Example 6 were replaced by the amounts (parts by mass) described in Table 1 of crosslinking agent (E-2) (SP1055F manufactured by SI Group, phenolic crosslinking agent) and crosslinking aid (G-2) (JIS Grade 2 zinc oxide, manufactured by HAKUSUI TECH CO., LTD.). The thermoplastic elastomer composition 7 weighed about 3 kg/batch. The results are described in Table 1. The x1000 SEM image is shown in Fig. 7.

[Example 10]

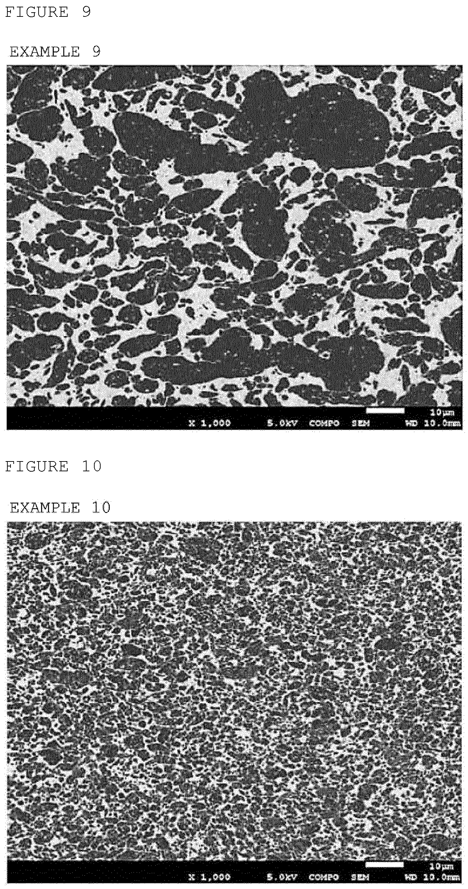

Thermoplastic elastomer composition 10 was produced and its properties were measured in the same manner as in Example 8, except that the polypropylene (D-1) used in the second step in Example 8 was replaced by polypropylene (D-2) (trade name: Prime Polypro (registered trademark) J105 manufactured by Prime Polymer Co., Ltd., MFR: 14.0 g/10 min). The thermoplastic elastomer composition 10 weighed about 3 kg/batch. The results are described in Table 1. The x1000 SEM image is shown in Fig. 10.

[Comparative Examples 1 to 3]

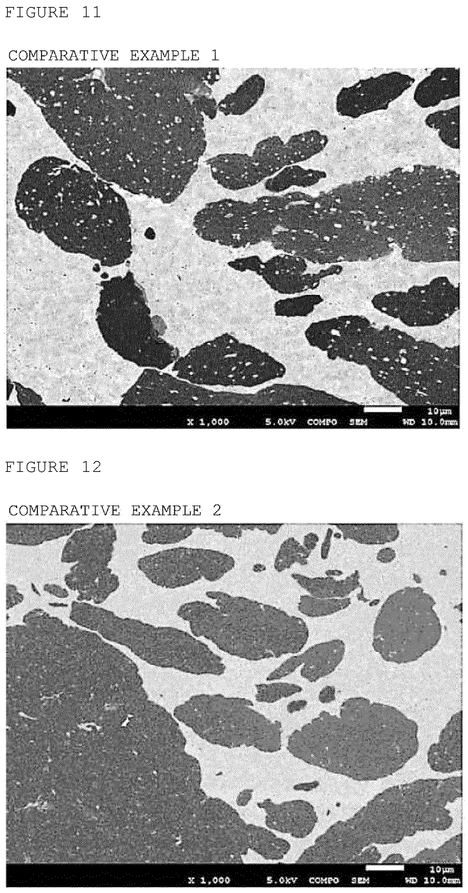

Thermoplastic elastomer compositions 11 to 13 were produced and their properties were measured in the same manner as in Examples 2, 4 and 7, respectively, except that the first step in Examples 2, 4 and 7 was not performed, and the second step and the third step were performed using the polypropylene (D-1) in the amount (parts by mass) described in Table 1. The thermoplastic elastomer compositions 11 to 13 each weighed about 3 kg/batch. The results are described in Table 1. The x1000 SEM images are shown in Figs. 11 to 13, respectively.

[Comparative Example 4]

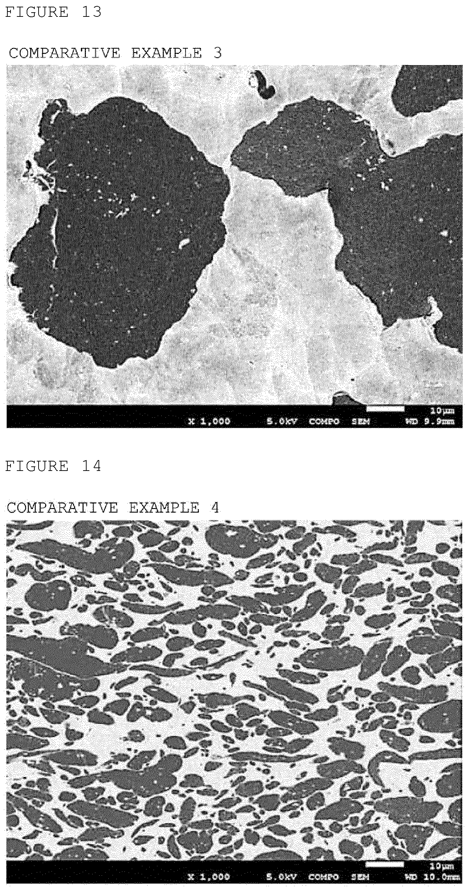

Thermoplastic elastomer composition 14 was produced and its properties were measured in the same manner as in Example 2, except that the first step in Example 2 was not performed, and the second step and the third step were performed using the maleic anhydride-modified polypropylene (B-1) and the polypropylene (D-1) in the amounts (parts by mass) described in Table 1. The thermoplastic elastomer composition 14 weighed about 3 kg/batch. The results are described in Table 1. The x1000 SEM image is shown in Fig. 14.

[Table 1]

Table 1

| | | | | Ex. 1* | Ex. 2* | Ex. 3 | Ex. 4 | Ex. 5 |
|---|---|---|---|---|---|---|---|---|
| Thermoplastic elastomer composition | | | | 1 | 2 | 3 | 4 | 5 |
| Components added in first step | A | Carbodiimide group-containing compound | (A-1) | 2.00 | 0.74 | 0.74 | 0.74 | 0.74 |
| | B | Olefin polymer having group reactive with carbodiimide group | (B-1) | 15.00 | 5.63 | 5.63 | 5.63 | 5.63 |
| | $D_1$ | Olefin polymer | (D-1) | 15.00 | 5.63 | 5.63 | 5.63 | 5.63 |
| Components added in second step | C | Polar rubbers | (C-1) | 48.50 | 48.50 | 44.00 | 36.00 | 36.00 |
| | | | (C-2) | - | - | - | - | - |
| | C1 | Polar rubber having group reactive with carbodiimide group | (C1-1) | - | - | 4.50 | 12.50 | 12.50 |
| | $D_2$ | Olefin polymers | (D-1) | - | 20.00 | 20.00 | 20.00 | 20.00 |
| | | | (D-2) | - | - | - | - | - |
| | F | Plasticizer | (F-1) | 19.50 | 19.50 | 19.50 | 19.50 | 19.50 |
| | Total (parts by mass) of components (except additives) added in first and second steps | | | 100.00 | 100.00 | 100.00 | 100.00 | 100.00 |
| | H | Additive Phenolic antioxidant | (H-1) | 0.40 | 0.40 | 0.40 | 0.40 | 0.40 |
| Components added in third step | E | Crosslinking agents | (E-1) | 0.54 | 0.54 | 0.54 | 0.54 | 0.71 |
| | | | (E-2) | - | - | - | - | - |
| | G | Crosslinking aids | (G-1) | 0.33 | 0.33 | 0.33 | 0.33 | 0.45 |
| | | | (G-2) | - | - | - | - | - |

(continued)

| | | | Ex. 1* | Ex. 2* | Ex. 3 | Ex. 4 | Ex. 5 |
|---|---|---|---|---|---|---|---|
| Thermoplastic elastomer composition | | | 1 | 2 | 3 | 4 | 5 |
| Characteristics of thermoplastic elastomer composition | A + B (parts by mass): (A-1) + (B-1) | | 17.00 | 6.37 | 6.37 | 6.37 | 6.37 |
| | Amount (parts by mass) of olefin resins: A + B + $D_1$ + $D_2$ | | 32.0 | 32.0 | 32.0 | 32.0 | 32.0 |
| | Proportion (%) of A to olefin resin components: A/(B + $D_1$ + $D_2$) × 100 | | 6.7 | 2.4 | 2.4 | 2.4 | 2.4 |
| | Amount (parts by mass) of polar rubbers: C + C1 | | 48.5 | 48.5 | 48.5 | 48.5 | 48.5 |
| | Average particle size (μm) | | 4.96 | 6.81 | 1.19 | 1.51 | 0.89 |
| | Elongation at break (EB) (%) | | 340 | 272 | 388 | 355 | 303 |
| | Tensile strength at break (TB) (MPa) | | 10.6 | 8.6 | 12.8 | 12.8 | 12.6 |
| | A hardness | | 95 | 94 | 93 | 94 | 94 |
| | CS (70°C, 24 hr) (%) | | 52 | 52 | 46 | 47 | 43 |
| | Taber abrasion test, CS-17 abrading wheel, 9.8 N, 1000 rotations, (mg) | | | 45 | | | ≤ 1 |
| | IRM 903 oil resistance test, ΔV (125°C, 72 hr) (%) | | 1.7 | 1.3 | 1.1 | 2.1 | 3.5 |
| *Reference example | | | | | | | |

Table 1 (continued)

| | | | | Ex. 6 | Ex. 7 | Ex. 8 | Ex. 9 | Ex. 10 |
|---|---|---|---|---|---|---|---|---|
| Thermoplastic elastomer composition | | | | 6 | 7 | 8 | 9 | 10 |
| Components added in first step | A | Carbodiimide group-containing compound | (A-1) | 0.56 | 0.56 | 0.62 | 0.36 | 0.62 |
| | B | Olefin polymer having group reactive with carbodiimide group | (B-1) | 4.22 | 4.22 | 4.69 | 2.72 | 4.69 |
| | $D_1$ | Olefin polymer | (D-1) | 4.22 | 4.22 | 4.69 | 2.72 | 4.69 |
| Components added in second step | C | Polar rubbers | (C-1) | 36.00 | 36.00 | 41.50 | 41.50 | 41.50 |
| | | | (C-2) | - | - | - | - | - |
| | C1 | Polar rubber having group reactive with carbodiimide group | (C1-1) | 12.50 | 12.50 | 15.00 | 15.00 | 15.00 |
| | $D_2$ | Olefin polymers | (D-1) | 23.00 | 23.00 | 10.50 | 14.70 | - |
| | | | (D-2) | - | - | - | - | 10.50 |
| | F | Plasticizer | (F-1) | 19.50 | 19.50 | 23.00 | 23.00 | 23.00 |
| | Total (parts by mass) of components (except additives) added in first and second steps | | | 100.00 | 100.00 | 100.00 | 100.00 | 100.00 |
| | H | Additive Phenolic antioxidant | (H-1) | 0.40 | 0.40 | 0.40 | 0.40 | 0.40 |

(continued)

|  |  |  |  | Ex. 6 | Ex. 7 | Ex. 8 | Ex. 9 | Ex. 10 |
|---|---|---|---|---|---|---|---|---|
| Thermoplastic elastomer composition |  |  |  | 6 | 7 | 8 | 9 | 10 |
| Components added in third step | E | Crosslinking agents | (E-1) | 0.54 | - | 0.62 | 0.62 | 0.62 |
|  |  |  | (E-2) | - | 3.00 | - | - | - |
|  | G | Crosslinking aids | (G-1) | 0.33 | - | 0.41 | 0.41 | 0.41 |
|  |  |  | (G-2) | - | 0.25 | - | - | - |
| Characteristics of thermoplastic elastomer composition | A + B (parts by mass): (A-1) + (B-1) |  |  | 4.78 | 4.78 | 5.31 | 3.08 | 5.31 |
|  | Amount (parts by mass) of olefin resins: A + B + $D_1$ + $D_2$ |  |  | 32.0 | 32.0 | 20.5 | 20.5 | 20.5 |
|  | Proportion (%) of A to olefin resin components: $A/(B + D_1 + D_2) \times 100$ |  |  | 1.8 | 1.8 | 3.1 | 1.8 | 3.1 |
|  | Amount (parts by mass) of polar rubbers: C + C1 |  |  | 48.5 | 48.5 | 56.5 | 56.5 | 56.5 |
|  | Average particle size ($\mu$m) |  |  | 2.17 | 1.72 | 1.55 | 3.69 | 1.36 |
|  | Elongation at break (EB) (%) |  |  | 358 | 366 | 299 | 280 | 330 |
|  | Tensile strength at break (TB) (MPa) |  |  | 11.3 | 8.9 | 8.9 | 6.4 | 10.0 |
|  | A hardness |  |  | 95 | 92 | 84 | 84 | 84 |
|  | CS (70°C, 24 hr) (%) |  |  | 48 | 54 | 32 | 36 | 31 |
|  | Taber abrasion test, CS-17 abrading wheel, 9.8 N, 1000 rotations, (mg) |  |  | $\leq 1$ |  | $\leq 1$ |  | $\leq 1$ |
|  | IRM 903 oil resistance test, $\Delta V$ (125°C, 72 hr) (%) |  |  | 2.7 | 4.4 | -0.3 | -1 | 0.7 |

Table 1 (continued)

|  |  |  |  | Comp. Ex. 1 | Comp. Ex. 2 | Comp. Ex. 3 | Comp. Ex. 4 |
|---|---|---|---|---|---|---|---|
| Thermoplastic elastomer composition |  |  |  | 11 | 12 | 13 | 14 |
| Components added in first step | A | Carbodiimide group-containing compound | (A-1) | - | - | - | - |
|  | B | Olefin polymer having group reactive with carbodiimide group | (B-1) | - | - | - | 6.37 |
|  | $D_1$ | Olefin polymer | (D-1) | - | - | - | - |

(continued)

| | | | | Comp. Ex. 1 | Comp. Ex. 2 | Comp. Ex. 3 | Comp. Ex. 4 |
|---|---|---|---|---|---|---|---|
| Thermoplastic elastomer composition | | | | 11 | 12 | 13 | 14 |
| Components added in second step | C | Polar rubbers | (C-1) | 48.50 | 36.00 | 36.00 | 48.50 |
| | | | (C-2) | | | | |
| | C1 | Polar rubber having group reactive with carbodiimide group | (C1-1) | - | 12.50 | 12.50 | - |
| | $D_2$ | Olefin polymers | (D-1) | 32.00 | 32.00 | 32.00 | 25.63 |
| | | | (D-2) | - | - | - | - |
| | F | Plasticizer | (F-1) | 19.50 | 19.50 | 19.50 | 19.50 |
| | Total (parts by mass) of components (except additives) added in first and second steps | | | 100.00 | 100.00 | 100.00 | 100.00 |
| | H | Additive Phenolic antioxidant | (H-1) | | | | |
| | | | | 0.40 | 0.40 | 0.40 | 0.40 |
| Components added in third step | E | Crosslinking agents | (E-1) | 0.54 | 0.54 | - | 0.54 |
| | | | (E-2) | - | - | 3.00 | - |
| | G | Crosslinking aids | (G-1) | 0.33 | 0.33 | - | 0.33 |
| | | | (G-2) | - | - | 0.25 | - |
| Characteristics of thermoplastic elastomer composition | A + B (parts by mass): (A-1) + (B-1) | | | - | - | - | 6.37 |
| | Amount (parts by mass) of olefin resins: A + B + $D_1$ + $D_2$ | | | 32.0 | 32.0 | 32.0 | 32.0 |
| | Proportion (%) of A to olefin resin components: $A/(B + D_1 + D_2) \times 100$ | | | 0.0 | 0.0 | 0.0 | 0.0 |
| | Amount (parts by mass) of polar rubbers: C + C1 | | | 48.5 | 48.5 | 48.5 | 48.5 |
| | Average particle size ($\mu$m) | | | 19.58 | 13.2 | 42.85 | 4.16 |
| | Elongation at break (EB) (%) | | | 40 | 143 | 19 | 76 |
| | Tensile strength at break (TB) (MPa) | | | 4.8 | 6.4 | 2.4 | 5.3 |
| | A hardness | | | 95 | 94 | 92 | 93 |
| | CS (70°C, 24 hr) (%) | | | 66 | 61 | 85 | 52 |
| | Taber abrasion test, CS-17 abrading wheel, 9.8 N, 1000 rotations, (mg) | | | | 40.7 | | 141 |
| | IRM 903 oil resistance test, $\Delta$V (125°C, 72 hr) (%) | | | 6 | 1.4 | 15.8 | 5.9 |

The thermoplastic elastomer compositions 1 to 10 obtained in Examples 1 to 10 had a matrix-domain structure containing fine domain particles, and attained high elongation at break and tensile strength at break as compared with the thermoplastic elastomer compositions obtained in Comparative Examples 1 to 3.

Maleic acid-modified polypropylenes are known to act as compatibilizers for olefin resins. The composition obtained in Comparative Example 4, which contained a maleic acid-modified polypropylene, had a matrix-domain structure containing fine domain particles, but failed to achieve sufficient elongation at break and tensile strength at break due to the fact that the composition was obtained using no carbodiimide group-containing compounds.

The thermoplastic elastomer compositions obtained in Examples 1 to 10 attained marked enhancements in elongation at break and tensile strength at break, and excellent oil resistance as compared with Comparative Examples 1 to 4. Further, in particular, the compositions of Examples 3 to 10 which contained the polar rubber (C1) having a group reactive with a carbodiimide group attained a finer particle size of the domains than those in Examples 1 and 2, and were thus shown to have a high level of compatibilization of the components.

[Examples 11 and 12]

As the first step, polycarbodiimide (A-1) as a carbodiimide group-containing compound (trade name: CARBODILITE HMV-15CA manufactured by Nisshinbo Chemical Inc., carbodiimide equivalent: 262 g), the maleic anhydride-modified polypropylene (B-1) obtained in Production Example 1, and the polypropylene (D-1) were introduced into an extruder (TEX44 manufactured by The Japan Steel Works, LTD., L/D = 70) in the amounts (parts by mass) described in Table 2 and were melt-kneaded at a cylinder temperature of 290°C, a screw rotational speed of 760 rpm, and a throughput of 1.33 kg/min. Thus, a composition was obtained which included a reaction product (a contact product) formed between the polycarbodiimide (A-1) and the maleic anhydride-modified polypropylene (B-1), and the polypropylene (D-1).

Next, as the second step, nitrile rubber (C-1) as a polar rubber (Nipol 1042 manufactured by Zeon Corporation, NBR, Mooney viscosity: 77.5, bound acrylonitrile content: 33.5, SP value: about 20) or nitrile rubber (C-2) as a polar rubber (Nancar 1051 manufactured by NANTEX Industry Co., Ltd., NBR, Mooney viscosity: 68, bound acrylonitrile content: 41, SP value: about 21), the polypropylene (D-2), polar rubber (C1-1) having a group reactive with a carbodiimide group (Nipol NX775 manufactured by Zeon Corporation, carboxyl group-containing NBR, Mooney viscosity: 44.0, bound acrylonitrile content: 26.7, SP value: about 20), plasticizer (F-1) (ADEKA CIZER RS-107 manufactured by ADEKA CORPORATION), additive (H-1) (Irganox 1010 manufactured by BASF, phenolic antioxidant), additive (H-2) (Nocrac 224 manufactured by OUCHI SHINKO CHEMICAL INDUSTRIAL CO., LTD., amine-ketone antiaging agent), additive (H-3) (Nocrac MMB manufactured by OUCHI SHINKO CHEMICAL INDUSTRIAL CO., LTD., benzimidazole antiaging agent), additive (H-4) (Nocrac CD manufactured by OUCHI SHINKO CHEMICAL INDUSTRIAL CO., LTD., aromatic secondary amine antiaging agent), additive (H-5) (PE4993 manufactured by Cabot Corporation, carbon black masterbatch) and the composition obtained in the first step were introduced into an intermeshing kneader (BB-L3200IM manufactured by KOBE STEEL, LTD., mixer size: 3.6 L) in the amounts (parts by mass) described in Table 2 and were melt-kneaded at 120 rpm. Subsequently, as the third step, crosslinking agent (E-1) (PERHEXA 25B manufactured by NOF CORPORATION, organic peroxide crosslinking agent) and crosslinking aid (G-1) (DVB-810 manufactured by NS Styrene Monomer Co., Ltd., divinylbenzene crosslinking aid) were added in the amounts (parts by mass) described in Table 2, and the mixture was dynamically crosslinked at 100 to 250°C to give thermoplastic elastomer compositions 15 and 16. The properties of the compositions were measured. The thermoplastic elastomer compositions 15 and 16 each weighed about 3 kg/batch. The results are described in Table 2.

[Example 13]

Thermoplastic elastomer composition 17 was produced and its properties were measured in the same manner as in Example 12, except that the amounts (parts by mass) of the components used in Example 12 were changed as described in Table 2, and the kneading in the second step was performed using an intermeshing kneader (BB-14IM manufactured by KOBE STEEL, LTD., mixer size: 14.4 L). The thermoplastic elastomer composition 17 weighed about 12 kg/batch. The results are described in Table 2.

[Table 2]

Table 2

| | | | | Ex. 11 | Ex. 12 | Ex. 13 |
|---|---|---|---|---|---|---|
| Thermoplastic elastomer composition | | | | 15 | 16 | 17 |
| Components added in first step | A | Carbodiimide group-containing compound | (A-1) | 0.55 | 0.55 | 0.41 |
| | B | Olefin polymer having group reactive with carbodiimide group | (B-1) | 4.24 | 4.24 | 3.19 |
| | $D_1$ | Olefin polymer | (D-1) | 4.24 | 4.24 | 3.19 |

(continued)

| | | | | Ex. 11 | Ex. 12 | Ex. 13 |
|---|---|---|---|---|---|---|
| Thermoplastic elastomer composition | | | | 15 | 16 | 17 |
| Components added in second step | C | Polar rubbers | (C-1) | - | 51.20 | 48.20 |
| | | | (C-2) | 51.20 | - | - |
| | C1 | Polar rubber having group reactive with carbodiimide group | (C1-1) | 9.02 | 9.02 | 8.50 |
| | $D_2$ | Olefin polymers | (D-1) | - | - | - |
| | | | (D-2) | 6.65 | 6.65 | 13.90 |
| | F | Plasticizer | (F-1) | 24.10 | 24.10 | 22.61 |
| | Total (parts by mass) of components (except additives) added in first and second steps | | | 100.00 | 100.00 | 100.00 |
| | H | Additives<br>Phenolic antioxidant | (H-1) | 0.20 | 0.20 | 0.20 |
| | | Amine-ketone antiaging agent | (H-2) | 0.40 | 0.40 | 0.40 |
| | | Benzimidazole antiaging agent | (H-3) | 1.20 | 1.20 | 1.20 |
| | | Aromatic secondary amine antiaging agent | (H-4) | 0.40 | 0.40 | - |
| | | Carbon black masterbatch | (H-5) | 2.00 | 2.00 | 2.00 |
| Components added in third step | E | Crosslinking agents | (E-1) | 0.85 | 0.85 | 0.81 |
| | | | (E-2) | - | - | - |
| | G | Crosslinking aids | (G-1) | 0.56 | - | 0.54 |
| | | | (G-2) | - | - | - |

Table 2 (continued)

|  |  |  | Ex. 11 | Ex. 12 | Ex. 13 |
|---|---|---|---|---|---|
| Characteristics of thermoplastic elastomer composition | A + B (parts by mass): (A-1) + (B-1) | | 4.79 | 4.79 | 3.60 |
| | Amount (parts by mass) of olefin resins: $A + B + D_1 + D_2$ | | 15.7 | 15.7 | 20.7 |
| | Proportion (%) of A to olefin resin components: $A/(B + D_1 + D_2) \times 100$ | | 3.6 | 3.6 | 2.0 |
| | Amount (parts by mass) of polar rubbers: C + C1 | | 60.2 | 60.2 | 56.7 |
| | Average particle size ($\mu$m) | | 1.98 | 1.37 | 1.84 |
| | Elongation at break (EB) (%) | | 287 | 240 | 305 |
| | Tensile strength at break (TB) (MPa) | | 6.2 | 4.8 | 7.9 |
| | A hardness | | 73 | 70 | 83 |
| | CS (70°C, 24 hr) (%) | | 28 | 21 | 29 |
| | CS (125°C, 72 hr) (%) | | 46 | 41 | 45 |
| | IRM 903 oil resistance test, $\Delta V$ (125°C, 72 hr) (%) | | -7 | 0.05 | -0.1 |
| | Gehman torsion test t10 (°C) | | -40 | -45 | -47 |
| | Fuel immersion test (%) | Fuel C | 13.8 | | 24.0 |
| | | CE20 | 32.0 | | 41.6 |
| | Fuel permeation test (g·mm/(m°·24 h)) | Fuel C | 900 | | 920 |
| | | CE20 | | | 1400 |
| | Static ozone deterioration test (time (hr) to cracking) | | | | 72 $\leq$ |

INDUSTRIAL APPLICABILITY

The thermoplastic elastomer compositions according to the present invention have elasticity and excellent properties such as oil resistance and chemical resistance, and are also excellent in moldability, thus finding suitable use as molding materials in various fields where elastic molded articles have been conventionally used. The molded articles obtained from the thermoplastic elastomer compositions of the present invention may be used in various applications, for example, tire rubbers, O-rings, industrial rolls, automobile boots (such as rack and pinion boots and constant velocity joint boots), packings (such as condenser packings), gaskets, belts (such as thermal insulation belts and copier belts), hoses (such as water hoses, brake reservoir hoses and radiator hoses), vibration-insulating rubbers, sponges (such as weather strip sponges, thermal insulation sponges, protective sponges and microcell foam sponges), cables (such as ignition cables, cabtire cables and high-tension cables), wire coating materials (such as high-voltage wire coating materials, low-voltage wire coating materials and marine wire coating materials), glass run channels, color skin materials, paper feed rolls, shoe soles and roofing sheets.

**Claims**

1. A thermoplastic elastomer composition obtained by dynamically heat treating:

    0.01 to 30 mass% of a carbodiimide group-containing compound (A),
    0.05 to 70 mass% of an olefin polymer (B) having a group reactive with a carbodiimide group,
    10 to 95 mass% of a polar rubber (C),
    0 to 85 mass% of olefin polymer (D), wherein the total of the carbodiimide group-containing compound (A), the olefin polymer (B) having a group reactive with a carbodiimide group, the polar rubber (C) and the optional olefin polymer (D) are taken as 100 mass%, and
    a crosslinking agent (E) capable of crosslinking the polar rubber (C),
    wherein the polar rubber (C) comprises a polar rubber (C1) having a group reactive with a carbodiimide group.

2. The thermoplastic elastomer composition according to Claim 1, comprising a reaction product (I) formed between the carbodiimide group-containing compound (A) and the olefin polymer (B) having a group reactive with a carbodiimide group.

3. The thermoplastic elastomer composition according to Claim 1 or 2, wherein the polar rubber (C1) having a group reactive with a carbodiimide group is a polar rubber having an active hydrogen-containing group in a side chain.

4. The thermoplastic elastomer composition according to any one of Claims 1 to 3, comprising a reaction product (II) formed between the carbodiimide group-containing compound (A) and the polar rubber (C1) having a group reactive with a carbodiimide group.

5. The thermoplastic elastomer composition according to any one of Claims 1 to 4, wherein the carbodiimide group-containing compound (A) is a polycarbodiimide having a repeating unit represented by the following general formula:

$$-N=C=N-R^1-$$

(wherein $R^1$ is a divalent organic group).

6. The thermoplastic elastomer composition according to any one of Claims 1 to 5, wherein the olefin polymer (B) having a group reactive with a carbodiimide group is an olefin polymer having an active hydrogen-containing group in a side chain.

7. The thermoplastic elastomer composition according to any one of Claims 1 to 6, wherein the olefin polymer (B) having a group reactive with a carbodiimide group is a graft copolymer of a polyolefin and a compound having a group reactive with a carbodiimide group.

8. The thermoplastic elastomer composition according to any one of Claims 1 to 7, wherein the olefin polymer (D) is a propylene polymer.

9. The thermoplastic elastomer composition according to any one of Claims 1 to 8, which shows a matrix-domain structure when observed with a scanning electron microscope (SEM) at a magnification of 200 times or more, and the average particle size of the domains is 0.01 to 20 $\mu$m as determined by the method indicated in the section "Particle size" of the description.

10. A molded article comprising the thermoplastic elastomer composition described in any one of Claims 1 to 9.

11. A method for producing a thermoplastic elastomer composition as defined in claim 1, comprising dynamically heat treating in a sequential or simultaneous manner:

a carbodiimide group-containing compound (A),
an olefin polymer (B) having a group reactive with a carbodiimide group,
a polar rubber (C),
a crosslinking agent (E) capable of crosslinking the polar rubber (C), and optionally
an olefin polymer (D).

12. The method for producing a thermoplastic elastomer composition according to Claim 11, comprising dynamically heat treating a blend comprising:

a reaction product (I) formed between the carbodiimide group-containing compound (A) and the olefin polymer (B) having a group reactive with a carbodiimide group,
the polar rubber (C),
the crosslinking agent (E) capable of crosslinking the polar rubber (C), and optionally
the olefin polymer (D).

**Patentansprüche**

1. Thermoplastische Elastomerzusammensetzung, erhalten durch dynamische Wärmebehandlung von:

0,01 bis 30 Masse-% einer carbodiimidgruppenhaltigen Verbindung (A),
0,05 bis 70 Masse-% eines Olefinpolymers (B), das eine mit einer Carbodiimidgruppe reaktive Gruppe aufweist,
10 bis 95 Masse-% eines polaren Kautschuks (C),
0 bis 85 Masse-% eines Olefinpolymers (D), wobei die Gesamtmenge der carbodiimidgruppenhaltigen Verbindung (A), des Olefinpolymers (B), das eine mit einer Carbodiimidgruppe reaktive Gruppe aufweist, des polaren Kautschuks (C) und des optionalen Olefinpolymers (D) als 100 Masse-% angenommen wird, und
ein Vernetzungsmittel (E), das in der Lage ist, den polaren Kautschuk (C) zu vernetzen,
wobei der polare Kautschuk (C) einen polaren Kautschuk (C1) umfasst, der eine mit einer Carbodiimidgruppe reaktive Gruppe aufweist.

2. Thermoplastische Elastomerzusammensetzung nach Anspruch 1, umfassend ein Reaktionsprodukt (I), das zwischen der carbodiimidgruppenhaltigen Verbindung (A) und dem Olefinpolymer (B), das eine mit einer Carbodiimidgruppe reaktive Gruppe aufweist, gebildet wird.

3. Thermoplastische Elastomerzusammensetzung nach Anspruch 1 oder 2, wobei der polare Kautschuk (C1), der eine mit einer Carbodiimidgruppe reaktive Gruppe aufweist, ein polarer Kautschuk ist, der eine aktive wasserstoffhaltige Gruppe in einer Seitenkette aufweist.

4. Thermoplastische Elastomerzusammensetzung nach einem der Ansprüche 1 bis 3, umfassend ein Reaktionsprodukt (II), das zwischen der carbodiimidgruppenhaltigen Verbindung (A) und dem polaren Kautschuk (C1), der eine mit einer Carbodiimidgruppe reaktive Gruppe aufweist, gebildet wird.

5. Thermoplastische Elastomerzusammensetzung nach einem der Ansprüche 1 bis 4, wobei die carbodiimidgruppenhaltige Verbindung (A) ein Polycarbodiimid ist, das eine sich wiederholende Einheit aufweist, die durch die folgende allgemeine Formel dargestellt wird:

$$-N=C=N-R^1-$$

(wobei $R^1$ eine zweiwertige organische Gruppe ist).

6. Thermoplastische Elastomerzusammensetzung nach einem der Ansprüche 1 bis 5, wobei das Olefinpolymer (B), das eine mit einer Carbodiimidgruppe reaktive Gruppe aufweist, ein Olefinpolymer ist, das eine aktive wasserstoffhaltige Gruppe in einer Seitenkette aufweist.

7. Thermoplastische Elastomerzusammensetzung nach einem der Ansprüche 1 bis 6, wobei das Olefinpolymer (B), das eine mit einer Carbodiimidgruppe reaktive Gruppe aufweist, ein Pfropfcopolymer aus einem Polyolefin und einer Verbindung ist, die eine mit einer Carbodiimidgruppe reaktive Gruppe aufweist.

8. Thermoplastische Elastomerzusammensetzung nach einem der Ansprüche 1 bis 7, wobei das Olefinpolymer (D) ein Propylenpolymer ist.

9. Thermoplastische Elastomerzusammensetzung nach einem der Ansprüche 1 bis 8, die bei Betrachtung mit einem Rasterelektronenmikroskop (REM) bei 200-facher Vergrößerung oder mehr eine Matrix-Domänenstruktur aufweist, und die durchschnittliche Partikelgröße der Domänen 0,01 bis 20 $\mu$m beträgt, wie nach dem im Abschnitt "Partikelgröße" der Beschreibung angegebenen Verfahren bestimmt.

10. Formteil, umfassend die thermoplastische Elastomerzusammensetzung, wie in einem der Ansprüche 1 bis 9 beschrieben.

11. Verfahren zur Herstellung einer thermoplastischen Elastomerzusammensetzung nach Anspruch 1, umfassend eine sequenzielle oder simultane dynamische Wärmebehandlung:

einer carbodiimidgruppenhaltigen Verbindung (A),
eines Olefinpolymers (B), das eine mit einer Carbodiimidgruppe reaktive Gruppe aufweist,
eines polaren Kautschuks (C),
eines Vernetzungsmittel (E), das in der Lage ist, den polaren Kautschuk (C) zu vernetzen, und optional
eines Olefinpolymers (D).

12. Verfahren zur Herstellung einer thermoplastischen Elastomerzusammensetzung nach Anspruch 11, umfassend eine dynamische Wärmebehandlung einer Mischung, die Folgendes umfasst:

ein Reaktionsprodukt (I), das zwischen der carbodiimidgruppenhaltigen Verbindung (A) und dem Olefinpolymer (B), das eine mit einer Carbodiimidgruppe reaktive Gruppe aufweist, gebildet wird,
den polaren Kautschuk (C),
das Vernetzungsmittel (E), das in der Lage ist, den polaren Kautschuk (C) zu vernetzen, und optional
das Olefinpolymer (D).

## Revendications

1. Composition d'élastomère thermoplastique obtenue par traitement thermique dynamique :

0,01 à 30 % en masse d'un composé contenant un groupe carbodiimide (A),
0,05 à 70 % en masse d'un polymère oléfinique (B) présentant un groupe réactif avec un groupe carbodiimide,
10 à 95 % en masse d'un caoutchouc polaire (C),
0 à 85 % en masse d'un polymère oléfinique (D), dans laquelle le total du composé contenant un groupe carbodiimide (A), du polymère oléfinique (B) présentant un groupe réactif avec un groupe carbodiimide, du caoutchouc polaire (C) et du polymère oléfinique facultatif (D) est pris comme étant 100 % en masse, et
un agent de réticulation (E) capable de réticuler le caoutchouc polaire (C),
dans laquelle le caoutchouc polaire (C) comprend un caoutchouc polaire (C1) présentant un groupe réactif avec un groupe carbodiimide.

2. Composition d'élastomère thermoplastique selon la revendication 1, comprenant un produit de réaction (I) formé entre le composé contenant un groupe carbodiimide (A) et le polymère oléfinique (B) présentant un groupe réactif avec un groupe carbodiimide.

3. Composition d'élastomère thermoplastique selon la revendication 1 ou la revendication 2, dans laquelle le caoutchouc polaire (C1) présentant un groupe réactif avec un groupe carbodiimide est un caoutchouc polaire présentant un groupe contenant de l'hydrogène actif dans une chaîne latérale.

4. Composition d'élastomère thermoplastique selon l'une quelconque des revendications 1 à 3, comprenant un produit de réaction (II) formé entre le composé contenant un groupe carbodiimide (A) et le caoutchouc polaire (C1) présentant un groupe réactif avec un groupe carbodiimide.

5. Composition d'élastomère thermoplastique selon l'une quelconque des revendications 1 à 4, dans laquelle le composé contenant un groupe carbodiimide (A) est un polycarbodiimide présentant une unité répétitive représentée par la formule générale suivante :

$$-N=C=N-R^1-$$

(dans laquelle $R^1$ est un groupe organique divalent).

6. Composition d'élastomère thermoplastique selon l'une quelconque des revendications 1 à 5, dans laquelle le polymère oléfinique (B) présentant un groupe réactif avec un groupe carbodiimide est un polymère oléfinique présentant un groupe contenant un hydrogène actif dans une chaîne latérale.

7. Composition d'élastomère thermoplastique selon l'une quelconque des revendications 1 à 6, dans laquelle le polymère oléfinique (B) présentant un groupe réactif avec un groupe carbodiimide est un copolymère greffé d'une polyoléfine et d'un composé présentant un groupe réactif avec un groupe carbodiimide.

8. Composition d'élastomère thermoplastique selon l'une quelconque des revendications 1 à 7, dans laquelle le polymère oléfinique (D) est un polymère de propylène.

9. Composition d'élastomère thermoplastique selon l'une quelconque des revendications 1 à 8, qui présente une structure à domaines matriciels lorsqu'elle est observée au microscope électronique à balayage (MEB) à un grossissement de 200 fois ou plus, et la taille moyenne des particules des domaines étant comprise entre 0,01 et

## EP 3 805 308 B1

20 $\mu$m, telle que déterminée par le procédé indiqué dans la section « Taille des particules » de la description.

10. Article moulé comprenant la composition d'élastomère thermoplastique décrite dans l'une quelconque des revendications 1 à 9.

11. Procédé de production d'une composition d'élastomère thermoplastique telle que définie dans la revendication 1, comprenant le traitement thermique dynamique de manière séquentielle ou simultanée :

un composé contenant un groupe carbodiimide (A),
un polymère oléfinique (B) présentant un groupe réactif avec un groupe carbodiimide,
un caoutchouc polaire (C),
un agent de réticulation (E) capable de réticuler le caoutchouc polaire (C), et facultativement
un polymère oléfinique (D).

12. Procédé de production d'une composition d'élastomère thermoplastique selon la revendication 11, comprenant le traitement thermique dynamique d'un mélange comprenant :

un produit de réaction (I) formé entre le composé contenant un groupe carbodiimide (A) et le polymère oléfinique (B) présentant un groupe réactif avec un groupe carbodiimide,
le caoutchouc polaire (C),
l'agent de réticulation (E) capable de réticuler le caoutchouc polaire (C), et facultativement
le polymère oléfinique (D).

FIGURE 1

EXAMPLE 1

FIGURE 2

EXAMPLE 2

FIGURE 3

EXAMPLE 3

FIGURE 4

EXAMPLE 4

FIGURE 5

EXAMPLE 5

FIGURE 6

EXAMPLE 6

FIGURE 7

EXAMPLE 7

FIGURE 8

EXAMPLE 8

FIGURE 9

EXAMPLE 9

FIGURE 10

EXAMPLE 10

FIGURE 11

COMPARATIVE EXAMPLE 1

FIGURE 12

COMPARATIVE EXAMPLE 2

FIGURE 13

COMPARATIVE EXAMPLE 3

FIGURE 14

COMPARATIVE EXAMPLE 4

FIGURE 15

EXAMPLE 11

FIGURE 16

EXAMPLE 12

FIGURE 17

EXAMPLE 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107383627 A
- WO 2005097840 A1
- JP 2004285252 A
- JP 2009161721 A
- JP S62215654 A
- JP S56143233 A
- JP S60156738 A
- US 4311628 A
- US 2972600 A
- US 3287440 A